# EUROPÄISCHE PATENTSCHRIFT

(11) **EP 0 927 444 B1**
(45) Veröffentlichungstag und Bekanntmachung des Hinweises auf die Patenterteilung: **10.12.2003**
(21) Anmeldenummer: 97909310.1
(22) Anmeldetag: 23.09.1997
(51) Int. Cl.: H01R 43/05, H02G 1/12

(54) **ENDLOSKABELBEARBEITUNGSVORRICHTUNG**
CONTINUOUS CABLE PROCESSING DEVICE
DISPOSITIF DE FABRICATION DE CABLES SANS FIN

(30) Priorität: 23.09.1996 CH 232996; 04.11.1996 WO PCT/EP96/04790
(43) Veröffentlichungstag der Anmeldung: 07.07.1999
(73) Patentinhaber: Schleuniger Holding AG, 4502 Solothurn (CH)
(72) Erfinder: LOCHER, Beat, CH-3608 Thun (CH); STEPAN, Jiri, CH-9320 Sargans (CH)
(74) Vertreter: Rosenich, Paul, Dipl.-Ing.
(86) Internationale Anmeldenummer: EP9705216
(87) Internationale Veröffentlichungsnummer: WO98013907

(56) Entgegenhaltungen:
- EP-A- 0 297 484
- EP-A- 0 623 982
- WO-A-96/24179
- WO-A-97/17751
- US-A- 5 445 051
- PATENT ABSTRACTS OF JAPAN vol. 097, no. 006, 30.Juni 1997 & JP 09 046844 A (YAZAKI CORP), 14.Februar 1997, in der Anmeldung erwähnt

## Beschreibung

Die Erfindung betrifft eine Endloskabelbearbeitungsvorrichtung nach dem Oberbegriff des Anspruches 1. Ausgeschlossen von der Erfindung sind somit Kabelbearbeitungsmaschinen, die ausschliesslich Kabelenden oder einzelne Kabelstücke (kein Endloskabel) verarbeiten. In der Messerstation können Kabel durchtrennt und/oder bearbeitet, z.B. abisoliert, werden. Im Sinne der Erfindung umfasst der Begriff Messerstation neu auch Vorrichtungen für andere Kabelbearbeitungsarten, wie z.B. Crimpen, Markieren o.dgl. Die Kabelfördervorrichtung transportiert dabei das Kabel entlang seiner Achse bzw. entlang eines Transportweges zur und von der Messerstation.

Herkömmliche Endloskabelbearbeitungsvorrichtungen operieren mit einer Kabelbearbeitung in der Messerstation, entlang eines Transportweges. Diese Art der Endbearbeitung legt die Bearbeitungszeiten fest. Ein Nachteil bei Aufbauten mit solcher Bearbeitung in einem Arbeitsbereich, in den verschiedene Bearbeitungswerkzeuge oder -stationen einführbar sind, besteht aber darin, dass keine Bearbeitungsstationen eingesetzt werden können, die länger sind als der Abstand zwischen den Transporteinrichtungen beidseits der Messerstation. Dieser Abstand sollte andererseits jedoch nicht zu gross sein, weil sonst keine kurzen Kabelstücke bereitgestellt werden können. Zudem müsste bei einem grossen Abstand ein weiteres Führungselement zwischen den Aufnahmebereich der Bearbeitungsstation und die Transporteinrichtung eingesetzt werden, was mit einem zusätzlichen Aufwand verbunden ist.

Ausserdem können bei bekannten Endloskabelbearbeitungsvorrichtungen die Kabel nur axial weitertransportiert werden.

Zum Beispiel wurde durch die Anmelderin unter der Bezeichnung CS9100 eine Vorrichtung auf den Markt gebracht, die in bezug auf einen Kabeltransportweg seitlich versetzte, nebeneinander liegende Messerpaare aufwies, die über einen oberen und einen unteren gemeinsamen Messerhalter von einem pneumatischen Antrieb so seitlich verschoben werden konnten, dass entweder durch das eine oder das andere Messer ein Kabel, das entlang der Achse in die Vorrichtung eingeschoben wurde, ein- bzw. durchgeschnitten werden konnte. Dazu waren selbstverständlich die oberen und unteren Messerhalter gegeneinander bewegbar. Ein Vorteil ist dabei gegenüber einer einzigen Messerposition gegeben; gleichzeitig ergibt sich aus der Praxis jedoch der Nachteil dieser Konstruktion in der Beschränktheit der möglichen Bearbeitungsgänge, die auf die beiden Messerpositionen beschränkt sind.

Die EP-A1-365691 beschreibt eine Vorrichtung mit einem Messerpaar, das an jedem Messer mehrere Schneiden aufweist. Nach herkömmlichem Kabellängstransport wird das Kabel dort mittels des Mehrschneidenmessers getrennt. Nach dem Messeröffnen bewegen sich die Kabelhandlingskomponenten linear und parallel zum Messer über nach links oder rechts zu einer Abisolierstelle am Mehrschneidenmesser. Anschliessend werden die Handlingskomponenten beiderseits des Messers mit den geschnittenen Kabeln in Richtung Messer auf die geforderte Abisolierlänge verschoben. Danach erfolgen ein neuerlicher Messerhub auf den gewünschten Abisolierdurchmesser und der Abzug des Isolationsrestes (Slug) sowie der lineare Weiter- oder Rücktransport des Kabels, je nach Weiterverarbeitung.

Ein Nachteil dieser Einrichtung ist, dass die beiden Kabelhandlingskomponenten (vor und nach dem Messer) ständig in Längs- und Querrichtung verschoben werden müssen, was zu hohem Verschleiss an zwei voneinander an sich unabhängigen hochbeweglichen Bauteilen führt (zusätzlich zu dem Axial-Vorschubantrieb für das Kabel). Diese müssen zudem aufeinander besonders justiert sein, um positionsrichtig und ausschussfrei arbeiten zu können. Ausserdem ist die Verwendung eines Mehrschneidenmessers wirtschaftlich ungünstig, da es zu ungleichmässiger Abnutzung kommen kann und daher auch noch nicht abgenutzte Schneiden ausgewechselt werden müssen.

Zudem erfordert diese Vorrichtung eine besondere Flexibilität des Kabels, das andernfalls durch Zerstörung bedroht ist.

Eine andere bekannte Vorrichtung "Stripmaster Model 900" der Firma Ideal Ind.,Inc. Sycamore, USA, verfügt ebenso über nebeneinander angeordnete Formmesser mit unterschiedlichen wirksamen Messerdurchmessern, so dass in nebeneinander liegenden Einschuböffnungen Kabel mit unterschiedlichem Durchmesser eingeschoben und von den Messern geschnitten bzw. beim Hinausziehen wieder abisoliert werden können. Diese Vorrichtung eignet sich nicht für automatische Abisoliervorgänge.

Eine weitere bekannte Vorrichtung, wie in der EP-A1-623982 offengelegt, verfügt über eine Schwenkvorrichtung, mit der ein Kabel bei jeweils einem von zwei nebeneinander angeordneten Messern positioniert werden kann. Hierbei tritt wieder das Problem der Flexibilität des Kabels auf. Darüber hinaus kommt bei dieser Vorrichtung das Kabel nicht optimal senkrecht auf die Messerebene zu liegen, so dass Schnitte durch die Messer eventuell auch schräg durchgeführt werden, wodurch die Schnitte über eine schlechte Qualität verfügen können, es sei denn, dass das zweite Messer relativ zum ersten schräg gestellt ist. Eine solche, durch die EP-A1 angegebene Schrägstellung hat jedoch den Nachteil, dass sie nur für bestimmte Messer optimiert ist; ausserdem verbreitert sie den Aufbau der Messerträger. Eine Anwendung anderer Werkzeuge ist nicht vorgesehen.

Eine weitere bekannte Vorrichtung der Firma Eubanks Engineering Co, Monrovia, USA mit der Bezeichnung "9800" verfügt über axial hintereinander angeordnete Messer mit unterschiedlichen Schnittiefen. Die Messer befinden sich an einem gemeinsamen oberen und unteren Messerträger, so dass ein eingesetztes Kabel entlang seiner Achse mehreren unterschiedlichen Bearbeitungsschritten gleichzeitig unterzogen werden kann. Eine solche Vorrichtung ist z.B. in der US-A-5146673 wiedergegeben. Der Nachteil einer solchen Anordnung liegt in einer relativ geringen Flexibilität bei der Auswahl der Bearbeitungsschritte, ausserdem ist durch den eingeschränkten Platz zwischen den Messern die mögliche Abisolierlänge eingeschränkt. Bei dem Versuch, die Abisolierlängen zu erhöhen, stiess man an Grenzen hinsichtlich der maximal vertretbaren Gerätegrösse.

Die US-A-5445051 beschreibt eine ähnliche Endloskabelbearbeitungsvorrichtung mit einer Kabelfördervorrichtung, die zwei Transporteinrichtungen zum linearen Fördern und Halten eines Kabels entlang eines, durch die Kabelachse definierten, ersten Transportweg umfasst. Sie verfügt über eine Messerstation zur Bearbeitung des Kabels an diesem Transportweg, wobei die Messerstation zwischen den beiden Transporteinrichtungen angeordnet ist und letztere somit vor und nach dem Bearbeiten des Kabels dieses oder je einen der - durch die Messerstation geschaffenen - einander zugewandten Kabelendbereiche im Transportweg in Kabellängsrichtung bewegbar halten.

Die Messerstation kann dabei Ihre Messer nur an diesem Transportweg einsetzen und die Messer müssen daher auf diesen Transportweg zentriert sein. Sollten unterschiedliche Messer an einem Kabel zum Einsatz gebracht werden, muss der Bearbeitungsvorgang unterbrochen und die Messer ausgetauscht werden.

Bei dem Stand der Technik "Kodera Typ 34" war die Abisolierlänge beschränkt auf den Abstand zwischen Messer und zweitem Rollenpaar. Mit einem speziellen Abisoliervorgang in Einzelschritten konnten zwar Einzelstücke mit der Länge dieses Abstandes nacheinander abgezogen (allerdings nicht vollständig vom Leiter heruntergezogen werden, lediglich stückweise am Leiter verschoben werden in Abzugsrichtung = Teilabzug) werden. Um längere Teilabisolierschritte zu ermöglichen, wurde der Kodera Typ 36 geschaffen mit einem vergrösserten Abstand zwischen Abisoliermessern und zweitem Rollenpaar mit dem Nachteil, dass mit dieser Vorrichtung keine kurzen Kabelstücke abisoliert werden konnten. Dieser Umstand soll durch ein neues Verfahren verbessert werden.

Ein weiteres Problem ergibt sich, dass bei den beim Bekannten - z.B. Eubanks 9800 - angebrachten Führungen mit starren Innendurchmessern dünnere, flexible Kabel nicht zentrisch geführt werden, was zu Problemen (häufigere Pannen) beim Kabelvorschub führen kann.

Probleme ergeben sich ebenso beim Auswurf des Abfalls (Slug) an Isolationsresten, die durch die Messer vom Leiter abgezogen werden und bisher fallweise nicht ordentlich entfernt wurden, da sie manchmal am Leiter feststeckten und so zu Pannen führten.

Die JP-A-1-281403 gibt eine Mehrstationskabelbearbeitungsvorrichtung an, bei der mittels eines schwenkbaren Verteilers das zu bearbeitende Kabel entlang eines Halbkreises den jeweiligen Stationen zugeführt wird. Das Kabel ist dabei entweder nicht endlos oder wird zwangsläufig gebogen.

Die US-A-4009738 gibt eine Kabelabisoliervorrichtung an, bei der Kabelenden im Messerbereich parallel aus ihrem Transportweg verschoben werden, um nachteilige Quetscheffekte beim Durchtrennen dieser Kabel zu kompensieren. Wie in der Fig.5 dieser US-A deutlich wird, kommt es dabei jedoch zu einem Knicken des Kabelendstückes.

Keine der bekannten Endloskabelbearbeitungsvorrichtungen bietet somit Möglichkeiten, ein Kabel knick- bzw. biegefrei aus seinem gegenwärtigen Transportweg zu entfernen, um es einer anderen Bearbeitungsstation, einem Manipulatorarm oder auch nur einem anderen Messer innerhalb derselben Messerstation zuzuführen. Dies führt bei bestimmten Kabeltypen zu erheblichen Problemen und schränkt so die Universalität der betreffenden Vorrichtungen ein.

Die JP-A-3-15211 gibt zwar eine Kabelendbearbeitungsvorrichtung an, die ein knick- und biegefreies Transportieren eines Kabelendes von einer Bearbeitungsstation zu einer anderen erlaubt, eine Endloskabelverarbeitung ist damit jedoch nicht möglich, da sekundäre Fördereinrichtungen fehlen und es offensichtlich auch nicht nahegelegt war, durch entsprechende aufwendige Umkonstruktionen, solche vorzuschlagen. Die JP-A-62-217816, US-A-3653412, US-A-4244101, US-A-4446615, US-A-4833778 und die US-A-4879926 geben vergleichbare Abisoliervorrichtungen an, die einzelne Kabelstücke quer zu deren Längserstreckung mittels Fördereinrichtungen von einer Bearbeitungsstation zur anderen transportieren. Ein Längsvorschub des Kabels ist durch diese bekannten Aufbauten jedoch nicht bekannt.

Die im Prioritätsintervall erschienene JP-A-9-46844 bezieht sich ebenso auf ein Kabelendbearbeitungsgerät und nicht auf ein Endloskabelbearbeitungsgerät. Immerhin versucht dieses Dokument eine Lösung anzugeben, wie platzökonomisch verschiedene Messer zeitlich hinter einander jedoch entlang eines Kabels zum Einsatz gelangen können, womit auch ein Biegen oder Knicken dieses Kabels entfällt. Die verschiedenen Messer sind dazu neben einander angeordnet und können auf Schienen zum Kabel querverschoben werden, um das jeweils eingeschobene Kabelendstück bearbeiten zu können. Nach der Bearbeitung muss dieses jedoch wieder aus seiner Bearbeitungsposition herausgezogen werden, um dem nächsten Kabel Platz zu machen.

Der Erfindung liegt somit eine erste Aufgabe zugrunde, eine verbesserte Vorrichtung zu schaffen, die das Verarbeiten von Kabeln erlaubt, die nicht geknickt oder gebogen werden sollen. Weiters soll die Verarbeitungsgeschwindigkeit hoch gehalten oder erhöht werden. Insbesondere soll weiter die Flexibilität der Bearbeitungsschritte und des Kabelhandlings erhöht werden.

Der Erfindung liegt andrerseits als zweite Aufgabe zugrunde, eine verbesserte Abisoliervorrichtung zu schaffen, die hinsichtlich der Universalität verbessert ist, grössere Abisolierlängen erlaubt und die Nachteile bei den oben erwähnten Konstruktionen vermeidet. Als dritte Aufgabe sollten auch Möglichkeiten gefunden werden, Koaxialkabel endlos und besonders zuverlässig bearbeiten zu können, wobei die Universalität dadurch nicht eingeschränkt werden soll.

Diese Aufgaben werden durch verschiedene Erfindungsschritte, die sich in den verschiedenen Patentansprüchen finden, realisiert. Die erste Aufgabe wird dabei durch die erfindungsgemässe Vorrichtung mit den Merkmalen des Anspruches 1 gelöst. Die motorische Verschiebbarkeit des Kabels (Transporteinrichtung) in einer Endloskabelbearbeitungsmaschine und der Messerstation vermeidet Kabelbiegen bzw. -knicken und die Flexibilität steigt. Weitere Ausbildungen sind in den abhängigen Ansprüchen 2 und 3 beschrieben.
Aus diesen Aufbauten ergeben sich im wesentlichen zwei Varianten: die Messerstation oder deren Werkzeuge vollführen eine Querbewegung zum Kabel (Ansprüche 2, 4, 5, 6, 7, 8, 13, 17, 23, 25) oder die Kabel vollführen in bzw. mit ihren Transporteinrichtungen eine Querbewegung in bezug auf deren ersten Transportweg (Ansprüche 20, 22, 23, 24, 25). Mischformen liegen im Rahmen der Erfindung.

### Zur ersten Variante:

Durch die erfindungsgemässe Vorrichtung mit den Merkmalen des Anspruches 1 wird die Aufgabe gelöst. Die neue Messeranordnung und deren Antrieb führen zu einer universellen, vollautomatisch tätigen und frei programmierbaren Trenn- bzw. Abisoliermöglichkeit. Diese wird durch zusätzliche, neue Verarbeitungsschritte bei Bedarf noch ergänzt. Bekannte Nachteile sind vermieden. Die erfindungsgemäss mögliche kompakte Bauform wirkt sich in der Praxis günstig und sehr universell aus.

Weitere Merkmale der Erfindung sind in den abhängigen Ansprüchen beschrieben bzw. ergeben sich aus den nachstehenden Angaben, die mit den Ansprüchen, der Figurenbeschreibung und der Zeichnung die gesamthafte Offenbarung der zum Teil auch unabhängig voneinander einsetzbaren Merkmale der Erfindung darstellen.

Wichtig ist jedenfalls, dass erfindungsgemäss beliebige Werkzeugpositionen seitlich nebeneinander vorgesehen sind und eine Schrittmotorsteuerung diese Werkzeugpositionen programmierbar ansteuern kann, so dass einerseits in unterschiedlichen Werkzeugpositionen das Kabel - oder auch mehrere nebeneinander liegende Kabel - das, bzw. die in einer Position gehalten werden, bearbeitet werden können.

Zweitens werden auch andere Arbeitsvorgänge erlaubt, wie z.B. Sägen, Einschneiden, Vertwisten, Verformen, Crimpen usw. des Kabels durch das Zusammenführen der Messer bzw. Werkzeuge, Schliessen und seitliches relativ zueinander Verschieben. Solches kann im Falle von Vertwistbacken als Werkzeuge mit keilförmigen Schrägflächen auch durch reine Vertikalbewegung zueinander realisiert sein. Weiters kann eine Vertwistlösung realisiert werden durch eine schwenkbare Ausführung der Werkzeughalter um einen Drehpunkt, der möglichst im Bereich der Achse des Kabels liegt, wenn der Linearvorschub für seitliche Verschiebung der Werkzeughalter dann nicht zu einer Verschiebung sondern zu einer Verschwenkung um diese Achse führt.

Weitere Bearbeitungsmöglichkeiten ergeben:sich, wenn wenigstens ein Werkzeughalter Schleif- oder Polierscheiben aufweist, die durch oszillierende oder kreisende Bewegung der Messerhalter zu einem Abschleifen der Leiterenden verwendet werden können, was insbesondere bei Glasfaserkabeln von Bedeutung sein kann.

Eine erfindungsgemäss vorgesehene motorische Steuerbarkeit des Anpressdruckes bzw. des Abstandes der Vorschubrollen bzw. Vorschubbänder zueinander bringt den Vorteil, dass während des Abziehens der Anpressdruck auf das Kabel erhöht werden kann, um so einen Schlupf zu verhindern, bzw. um mehr Kraft auf das Kabel aufzubringen. Würde der Anpressdruck, wie im Stand der Technik bekannt, über den gesamten Vorgang aufrecht erhalten bleiben, hätte das den Nachteil, dass das Kabel bzw. sein Mantel über seine ganze Länge Quetschungen erleidet, die so höchstens an einem kleinen Bereich auftreten. Ausserdem wird erfindungsgemäss die Abnutzung des Riemens reduziert. Da der Abziehwiderstand am Anfang der Abziehbewegung in der Regel am grössten ist, kann erfindungsgemäss der Anpressdruck über einen Abziehweg von z.B. 4mm erhöht und anschliessend wieder auf ein geringeres Mass gesenkt werden. Allfällige Markierungen bzw. Quetschungen sind sohin auf ca. 4mm beschränkt.

Als weiterer Erfindungsgedanke ist die individuelle Öffenbarkeit der Rollen bzw. Bänder zu sehen, das heisst, dass die Antriebseinheiten der Bänder sowohl vor als auch nach dem Werkzeughalter voneinander unabhängig geöffnet und geschlossen bzw. in ihrem Anpressdruck eingestellt werden können. Bevorzugt können die Rollen nicht nur im Anpressdruck eingestellt werden und mittels Elektromotor auf einen gewünschten Abstand zueinander gefahren werden, sondern sie können darüber hinaus gegebenenfalls auch vollständig geöffnet werden. Das gekoppelte Öffnen und Schliessen der beiden Rollenpaare mit einem einzigen Antriebsmotor und einem Drehteller ist per se bekannt aus einer 1989 veröffentlichten Maschine ATC 9000 der Sutter Electronic AG Thun, Schweiz, deren diesbezügliche Lehre als im Rahmen dieser Erfindung liegend geoffenbart gilt, wobei gegenüber dem Bekannten eine vollständig unabhängige Öffenbarkeit der Rollen bzw. Bänder vorgesehen ist.

Als weiterer Vorteil einer unabhängigen Öffenbarkeit des zweiten Rollen- bzw. Bandpaares von der Öffnung des ersten Rollen- bzw. Bandpaares ist, dass mit Hilfe des ersten Rollenpaares ein Vorabzug von z.B. 130mm durchgeführt werden kann, nachdem das Kabel in gewünschter Länge, z.B. 500mm, durch das zweite Rollenpaar bereits durch ist, so dass auch lange Abisolierlängen, z.B. für Netzkabel, erfolgreich abisoliert werden können. Denkbar ist auch, noch grössere Längen vorabzuziehen, wobei später von Hand der Rest der Isolation vom Leiter abgezogen wird.

Für einen längeren Vollabzug oder längeren Teilabzug könnten umgekehrt nach erfolgtem Vorabzug gemäss obiger Verfahrensangabe, der Anpressdruck des zweiten Rollen- bzw. Bandpaares erhöht und den Mantel unter Haftreibung durch Drehung in Abzugsrichtung vom Leiter abgezogen werden.

Wenn man ein langes Abisolierstück in wenigen Einzelschritten abisolieren will, kann man dies erfindungsgemäss dadurch durchführen, dass bei jedem Teilschritt das zweite Rollen- bzw. Bandpaar geöffnet wird. Gegenüber dem Bekannten (z.B. KODERA Type 36 mit einem besonders grossen Abstand zwischen den linken und rechten Vorschubrollen) hat man den Vorteil, auch kurze Kabelstücke abisolieren zu können. Gegenüber dem Bekannten (z.B. KODERA Type 34 mit einem relativ kleinen Abstand zwischen den linken und rechten Vorschubrollen) hat man andererseits den Vorteil einer nahezu beliebigen Abisolierlänge und ist überhaupt nicht eingeschränkt auf den Abstand zwischen Werkzeughalter und zweitem, axial dahinterliegenden Rollenpaar, der bisher bei allen bekannten Maschinen den Abisolierabstand begrenzt.

zur zweiten Variante:
Abgesehen von der Kabelbearbeitung in der (eigenen) Messerstation können für bestimmte Verarbeitungen auch das Benutzen von Weiterbearbeitungsstationen sinnvoll, vor allem zeitsparend sein. Insbesondere für diesen Aspekt sind die Merkmale der Ansprüche 19, 20, 21, 22, 23 besonders geeignet.

Die Anordnung weiterer Endbearbeitungs-Stationen direkt neben der Messer- und gegebenenfalls auch Abisolierstation ermöglicht demzufolge das Einsetzen beliebiger Bearbeitungsstationen. Es können also auch Bearbeitungsstationen eingesetzt werden, die länger sind als ein akzeptabler Abstand zwischen den Transporteinrichtungen beidseits der Messerstation. In einer bevorzugten Ausführungsform wird nach dem Durchtrennen des Kabels bereits das Abisolieren der beiden erzeugten Kabelenden in zwei quer zur Kabelachse nebeneinander angeordneten Abisolierstationen. durchgeführt. Durch die Möglichkeit der parallelen Endbearbeitung kann die Verarbeitungszeit der einzelnen Schritte halbiert werden. Aber auch bei herkömmlicher serieller Kabelbearbeitung ergeben sich Vorteile durch die seitliche Weitergabemöglichkeit von Kabeln zu Transport- oder Lagerstationen o.dgl.

Weitere Merkmale der Erfindung sind in den abhängigen Ansprüchen beschrieben bzw. ergeben sich aus den nachstehenden Angaben, die mit den Ansprüchen, der Figurenbeschreibung und der Zeichnung, die weitere Offenbarung der zum Teil auch unabhängig voneinander einsetzbaren Merkmale der Erfindung darstellen.

Wichtig ist für diesen Erfindungsgedanken jedenfalls, dass erfindungsgemäss beliebige Stationen für das Kabel seitlich nebeneinander vorgesehen werden können und mindestens eine Kabelhalteeinrichtung in einer Führungseinrichtung von einer Antriebsvorrichtung, insbesondere einer Schrittmotorsteuerung so bewegbar ist, dass zumindest ein Kabelende seitlich einer dieser Stationen zuführbar ist. Unter Station ist beispielsweise aber auch ein Greifarm o.dgl. zu verstehen.

Die einsetzbaren Stationen ermöglichen nebst dem Abisolieren auch andere Arbeitsvorgänge, wie z.B. Sägen, Einschneiden, Vertwisten, Verformen, Crimpen, Löten usw. Es versteht sich von selbst, dass in den einzelnen Bearbeitungsstationen gegebenenfalls zusätzlich oder alternativ auch die Werkzeuge quer zur Kabelachse verschiebbar gelagert und antreibbär sind.

Weitere Bearbeitungsmöglichkeiten ergeben sich beispielsweise, wenn wenigstens eine Bearbeitungsstation Schleifoder Polierscheiben aufweist, die durch oszillierende oder kreisende Bewegung der Messerhalter zu einem Abschleifen der Leiterenden verwendet werden können, was insbesondere bei Glasfaserkabeln von Bedeutung sein kann.

Bevorzugt können die Transporteinrichtungen, bzw. deren Rollen oder Bänder, vorzugsweise individuell geöffnet werden. Die Antriebseinheiten der Bänder sowohl vor als auch nach der Messerstation können voneinander unabhängig geöffnet und geschlossen bzw. in ihrem Anpressdruck eingestellt werden. Bevorzugt können die Rollen nicht nur im Anpressdruck eingestellt werden und mittels Elektromotor auf einen gewünschten Abstand zueinander gefahren werden, sondern sie können darüber hinaus gegebenenfalls auch vollständig geöffnet werden. Der Anpressdruck wird vorzugsweise an die Bearbeitungsschritte in der jeweiligen Bearbeitungsstation angepasst.

Gegenüber dem Bekannten hat man den Vorteil für beide Enden gleichzeitig, sowohl kleine als auch beliebig grosse Bearbeitungs-, insbesondere Abisolierlängen ohne unnötiges Wegund Zuführen der Kabelenden zu ermöglichen. Die Bearbeitungslänge ist überhaupt nicht auf den Abstand zwischen den beiden Transporteinrichtungen eingeschränkt.

Der weitere Erfindungsaspekt hinsichtlich der Varianten mit rotierenden Messern ist in den Ansprüchen 26 bis 31 dargelegt. Die übrigen abhängigen Ansprüche beziehen sich auf weitere vorteilhafte Ausgestaltungen.

Besondere Weiterbildungen bzw. Ausbildungen und Varianten der Erfindung sind - wie schon erwähnt - in den abhängigen Ansprüchen beschrieben bzw. unter Schutz gestellt. Besondere Verfahren ergeben sich aus Anwendung von Verfahrenschritten aus den Ansprüchen.

Es ist im zuge der verbesserten universellen Ausstattung von Abisoliermaschinen - nach einem vierten Grundgedanken - erfindungsgemäss auch vorgesehen, Einspann- und/oder Zentrierbacken und/oder Schneidevorrichtungen in Modulen unterzubringen, die zu einem Grundrahmen einer Abisoliermaschine hinzugenommen oder weggegeben werden können. Erfindungsgemäss ist es dabei von besonderem Vorteil, wenn solche Module beweglich arretierbar - z.B. schwenkbar - anbringbar sind, um im Servicefall, z.B. beim Auswechseln von Backen oder Messern, besseren Zugang zu haben. Eine besondere Ausgestaltung die diesen auch unabhängig anwendbaren erfinderischen Gedanken beschreibt, ist in Anspruch 30 angegeben.

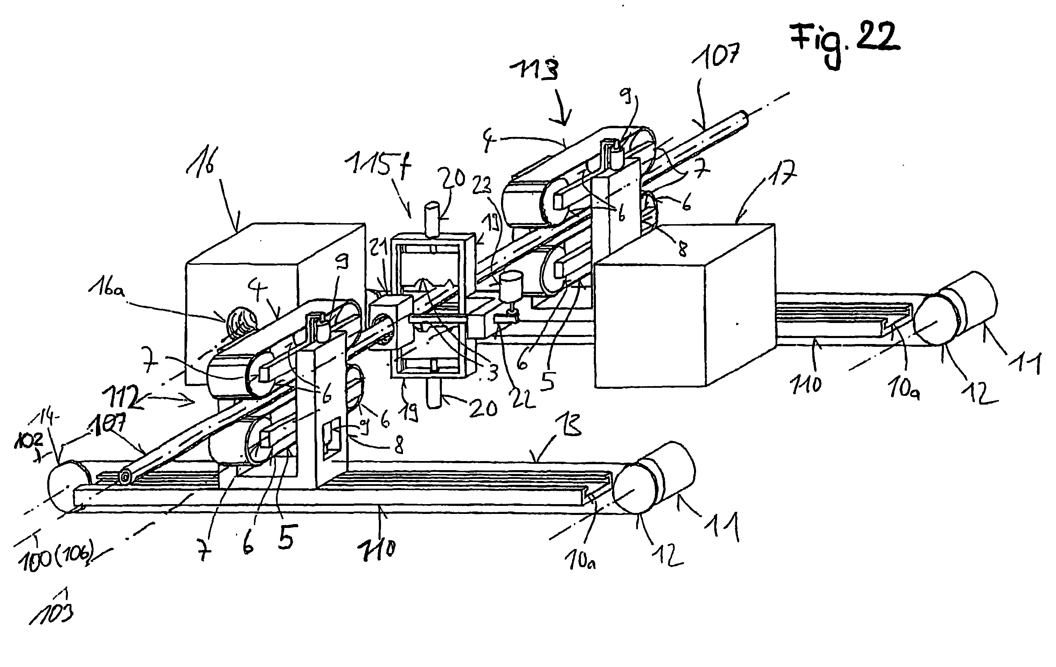

Anhand von beispielhaften Figuren, die für die unterschiedlichen Erfindungsaspekte nicht einschränkend sind, werden bevorzugte Ausführungsbeispiele dargestellt.
Die Figuren sind zusammenhängend und übergreifend beschrieben, da - mit Ausnahme von Fig.22 - gleiche Bezugszeichen gleiche Bauteile und gleiche Bezugszeichen mit unterschiedliche Indizes ähnliche Bauteile mit gleichen oder ähnlichen Funktionen bedeuten. Die Bezugszeichenliste und der Informationsgehalt der Figuren ist integrierender Offenbarungsbestandteil dieser Anmeldung.

Es zeigen dabei die
Fig.1 eine Symboldarstellung einer neuen Vorrichtung in Schrägansicht
Fig.2 eine Variante dazu mit gemeinsam geführten oberen und unteren Werkzeughaltern
Fig.3 symbolische Beispiele unterschiedlicher Modulkonfiguration eines neuartigen Modulaufbaus einer Abisoliermaschine mit Rollenantrieb;
Fig.4 symbolische Beispiele gemäss Fig.3 jedoch mit Bandantrieb;
Fig.5a;b eine Serie von 8 unterschiedlichen Verfahrensschritten eines erfindungsgemässen Abisoliervorgangs an einem symbolisch dargestellten Aufbau mit neuartigen Schiebeführungen;
Fig.6 ein Detail eines erfindungsgemässen Werkzeughaltervorschubs einer Variante
Fig.7 einen Ausschnitt aus einer neuartigen Abisolierma schine mit Schiebeführungen gemäss Fig.5
Fig.8 eine Variante mit grösserem Abstand zwischen vorderem und hinterem Endlosbandantrieb 12 mit Massangaben eines konkreten Ausführungsbeispiels, die um ca. ± 25-75% im Rahmen der Erfindung variierbar sind;
Fig.9 eine Variante mit verkürztem Abstand und den sich daraus ergebenden Effekten mit Wertangaben, die um ca. ± 25-75% im Rahmen der Erfindung variierbar sind;
Fig.10 eine Gruppe verschiedener bei der Erfindung optimal einsetzbarer Werkzeuge, für dem Fachmann bekannte unterschiedliche Anwendungen;
Fig.11 den linken Teil einer Draufsicht einer Vorrichtung mit Bandantrieb 12(Grundriss von Fig. 13)und einem Schwenkantrieb für die Führung;
Fig.12 den rechten Teil derselben Draufsicht;
Fig.13 analog dazu den linken Teil einer nicht vollständigen Ansicht mit abgenommenem oberen Band und mit einer schwenkbaren Kabelführung vor den Werkzeugen;
Fig.14 eine Variante eines rechten Teils dieser Ansicht;
Fig.15 eine Variante zu Fig.12 mit Rollenantrieb;
Fig.16 erfindungsgemässe Verfahrensschritte zum Abisolieren grösserer Längen;
Fig.17 bis 20 symbolische Darstellungen zur Erläuterung eines erfindungsgemässen Verfahrens zur Programmierung der Steuerung;
Fig.21 ein Detail des Messerantriebes einer Station gem. Fig.28;
Fig.22 einen schematischen Aufbau mit Quertransportmöglichkeit für das Kabel;
Fig.23 eine Symboldarstellung querverschieblicher Transporteinheiten;
Fig.24 eine Variante zu Fig.23 mit einer kombinierten Querverschieblichkeit von Transporteinrichtung und Messerstation;
Fig.25 einen realistischen Aufbau gemäss Fig.23;
Fig.26 den Aufbau gemäss Fig.25 in querverschwenktem Zustand;
Fig.27 einen Aufbau mit unabhängig von einander verschiebbaren Transporteinheiten;
Fig.28 eine Messerstation mit rotierbaren Messern;
Fig.29 die Station nach Fig.28 als montiertes Modul in ausgeschwenktem Zustand und im Betriebszustand;
Fig.30 eine Frontansicht der Station nach Fig.28;
Fig.31 ein Schnitt durch die Station und
Fig.32 ein Detail der Zentrierbackenansteuerung in der Station.

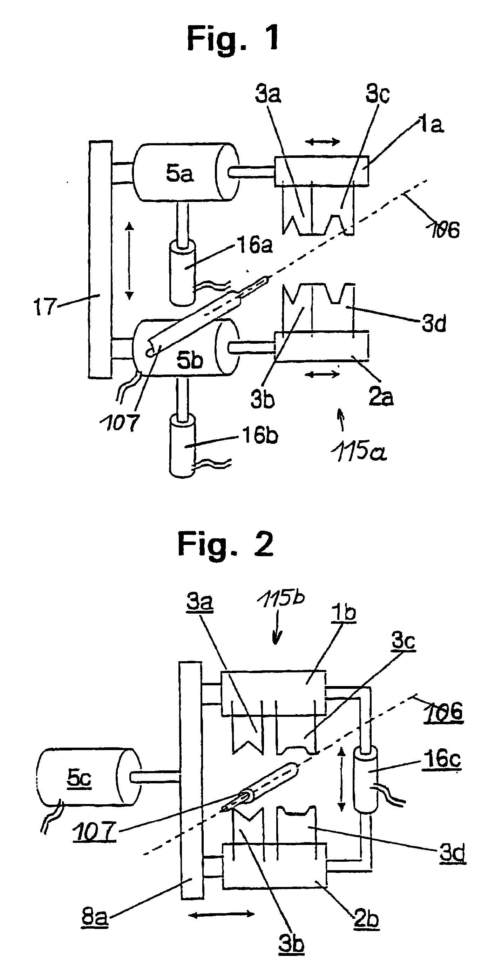

Fig.1 zeigt eine Symboldarstellung einer neuen erfindungsgemässen Vorrichtung in Schrägansicht mit Werkzeugträgern 1,2 und darauf gehaltenen Messern 3, von denen auch mehrere (mehr als die dargestellten 2 Paare) nebeneinander an vergrösserten Werkzeugträgern 1,2 angebracht sein können. Symbolisch dargestellte Antriebe 5a bzw. 5b treiben die Werkzeugträger seitlich in bezug auf die Achse 106 an. Symbolische Schliessantriebe 16a und 16b erlauben das Schliessen der Werkzeughalter 1,2 gemeinsam (über eine Steuerung) oder getrennt. Eine Führung 17 hält die Werkzeugträger bzw. -halter und die Antriebe parallel.

Fig.2 zeigt eine Variante dazu mit gemeinsam geführten oberen und unteren Werkzeughaltern 1,2 über einen Schliessantrieb 16c z.B. mittels Spindeltrieb und einem einzigen Seitantrieb 5c. Diese vereinfachte Variante baut kleiner, ermöglicht jedoch - im Vergleich zur ersten - nur weniger Arbeitsschritte;

Beiden obgenannten Figuren beziehen sich auf einen wichtigen Aspekt der Erfindung nämlich die annähernd beliebige Bewegbarkeit wenigstens eines Kabelbearbeitungswerkzeuges, insbesondere eines Messers o.dgl. in einer Ebene etwa senkrecht auf die Kabelvorschubrichtung. Die Bewegbarkeit könnte bei Bedarf auch stufenlos sein.

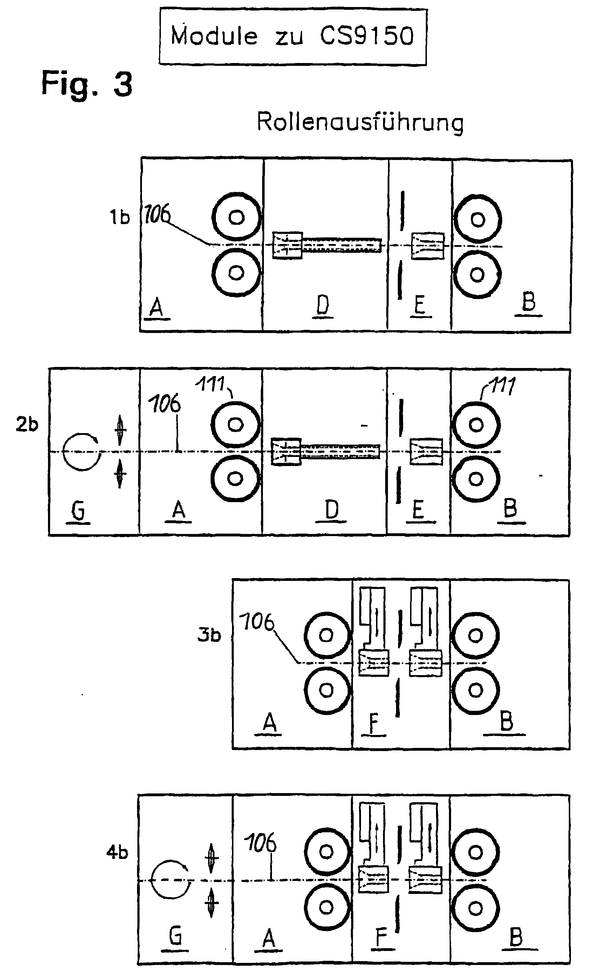

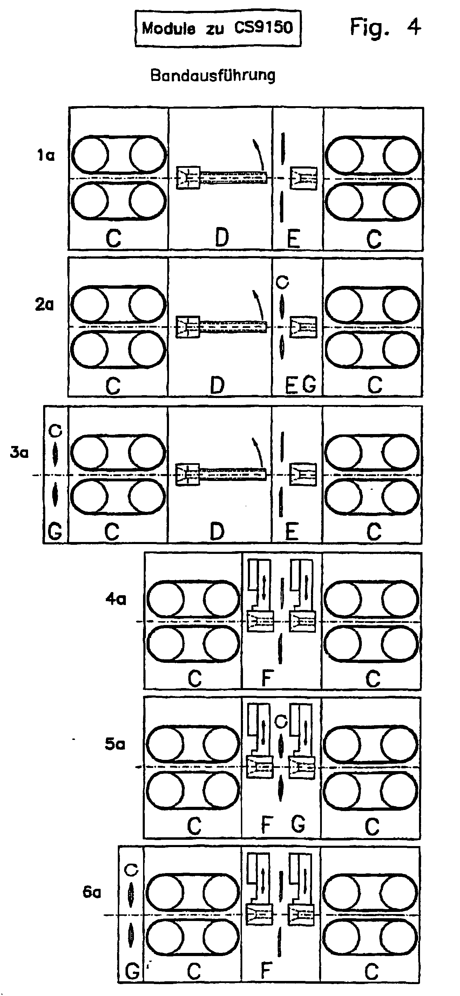

Fig.3 bezieht sich auf einen davon unabhängigen, jedoch bevorzugt bei obigen Kabelverarbeitungsmaschinen einsetzbaren neuen Aspekt eines modularen Aufbaus einer Abisoliermaschine. Die Beispiele 1b bis 4b zeigen dabei symbolisch Vorschubmodule A und B mit Rollen, die jedoch beispielsweise zum Teil auch ersetzt werden könnten mit anderen Vorschubmodulen z.B. einem Vorschubmodul C mit Bändern gemäss Fig.4, so dass sich z.B. ein Vorschubmodul A mit einem Vorschub Modul C ergänzt unter Entfall des Moduls B.

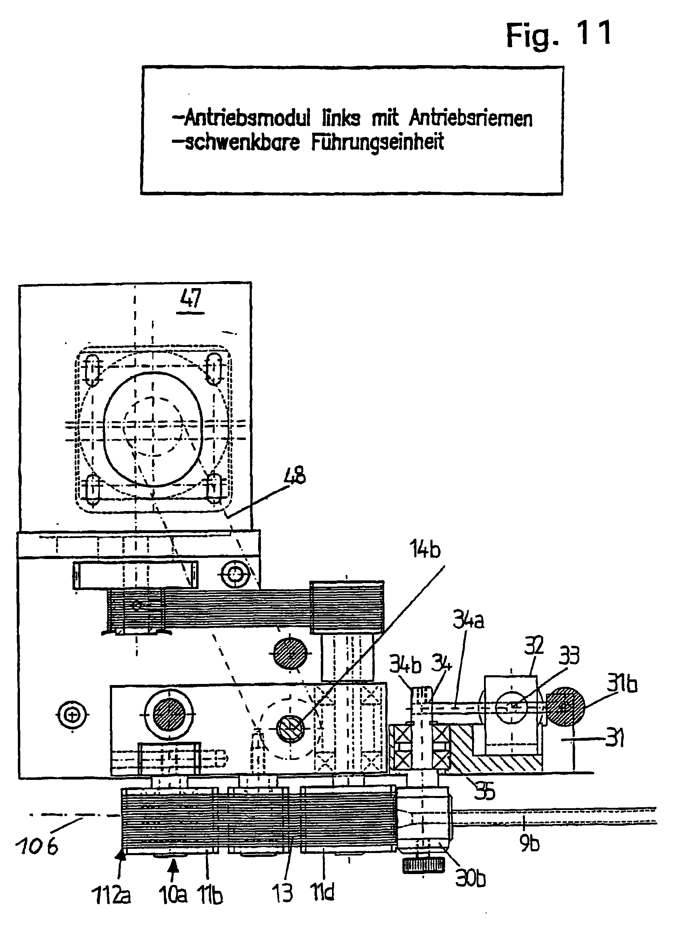

Ein weiters häufig zum Einsatz gelangendes Modul D mit schwenkbarem Führungsrohr kommt vor einem Schneide- bzw. Messermodul E zum Einsatz. Das Messermodul ist vorzugsweise so aufgebaut, wie in Fig. 1 oder 2 dargestellt, wobei bevorzugt eine weitere starre oder verschiebbare Führung angeordnet ist. Mit Fig.11 wird die Funktion des schwenkbaren Führungsrohres erläutert.

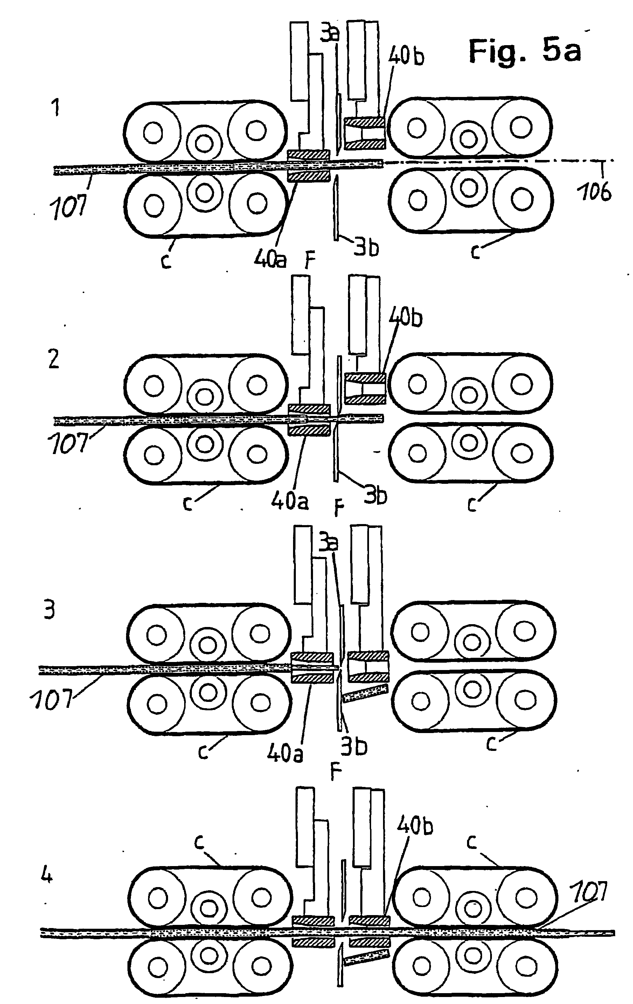

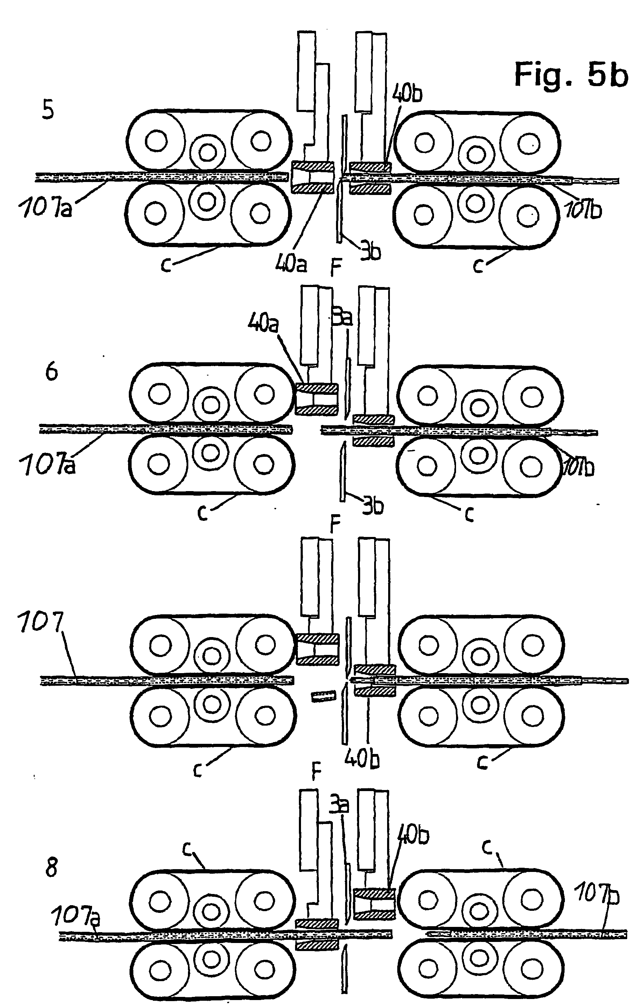

Modul D und E können, wie in den Beispielen 3b, 4b sowie 3a und 4a dargestellt, durch ein Modul F ersetzt werden, dass wenigstens eine, vorzugsweise aber, wie dargestellt, zwei verschiebbare Führungen aufweist, die ein neues spezielles Abisolierverfahren ermöglichen, wie mit Fig. 5a und b erläutert wird.

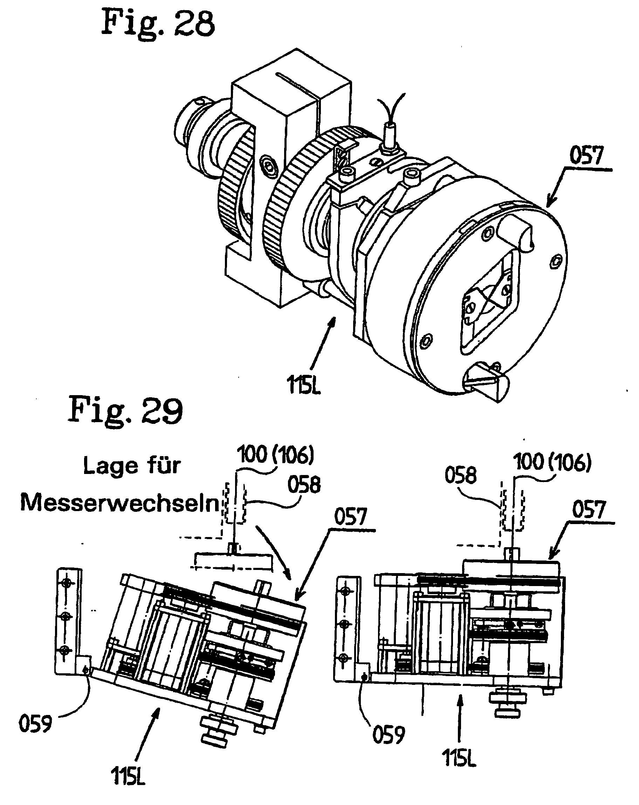

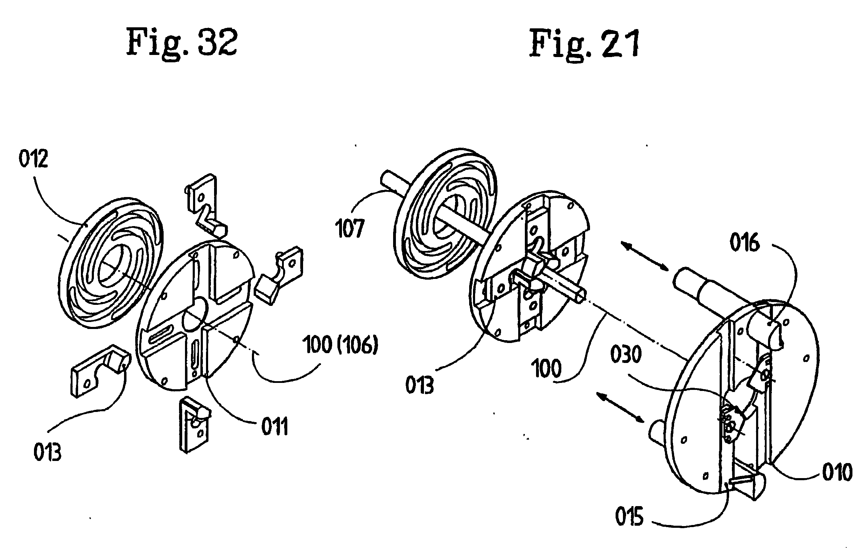

Die Abisoliervorrichtung kann erfindungsgemäss durch beliebige weitere Module ergänzt werden, wobei als Beispiel ein Modul G eingezeichnet ist, das eine "Coax-Box" darstellt, nämlich eine rotativ wirkende Einschneidebox, wie sie insbesondere für Koaxialkabel zum Einsatz gelangen kann. Eine solchen Coax-Box ist beispielsweise durch die Schleuniger AG unter der Bezeichnung CA 9170 auf den Markt gebracht worden, weshalb auf deren Aufbau nicht näher einzugehen ist. Der Fachmann kann die diesbezügliche Lehre problemlos von dort übernehmen. Sie gilt somit als im Rahmen dieser Anmeldung liegend geoffenbart. Diese Anmeldung umfasst jedoch ein neuartiges rotatives Schneidmodul, das gegenüber der CA 9170 Vorteile aufweist. Insbesondere eine einfache Messeransteuerung und vollständig unabhängig ansteuerbare Zentrierbacken zeichen sie aus, wie in den Fig.28 bis 33 dargestellt.

Wichtig ist bei diesem unabhängigen Erfindungsaspekt, dass ein Grundaufbau angeboten wird, der es erlaubt in universeller Art und Weise den Abisolierbedürfnissen zu entsprechen. Der sich daraus ergebende Vorteil liegt zuerst in der Herstellung, da in der Fabrik die Module unabhängig von einander erzeugt und gelagert werden können. In zweiter Linie ergibt sich ein Vorteil beim Anwender, dessen Abisolierbedürfnisse sich gegebenenfalls mit der Zeit verändern. Mit dem Austausch der entsprechenden Module vor Ort kann die erfindungsgemässe Vorrichtung nachträglich adaptiert werden. Die technische Realisierung dieses Aspekts liegt in linearen Führungen im Grundgehäuse, die mit gegengleichen Führungen an den Modulen kooperieren, so dass die Module mit ihren Arbeitselementen zentrisch zur Kabelvorschubachse 106 zu liegen kommen. Dieses erlaubt im Vergleich zum Stand der Technik auch eine raschere Montage kompletter Abisolier- bzw. Kabelbearbeitungsvorrichtungen.

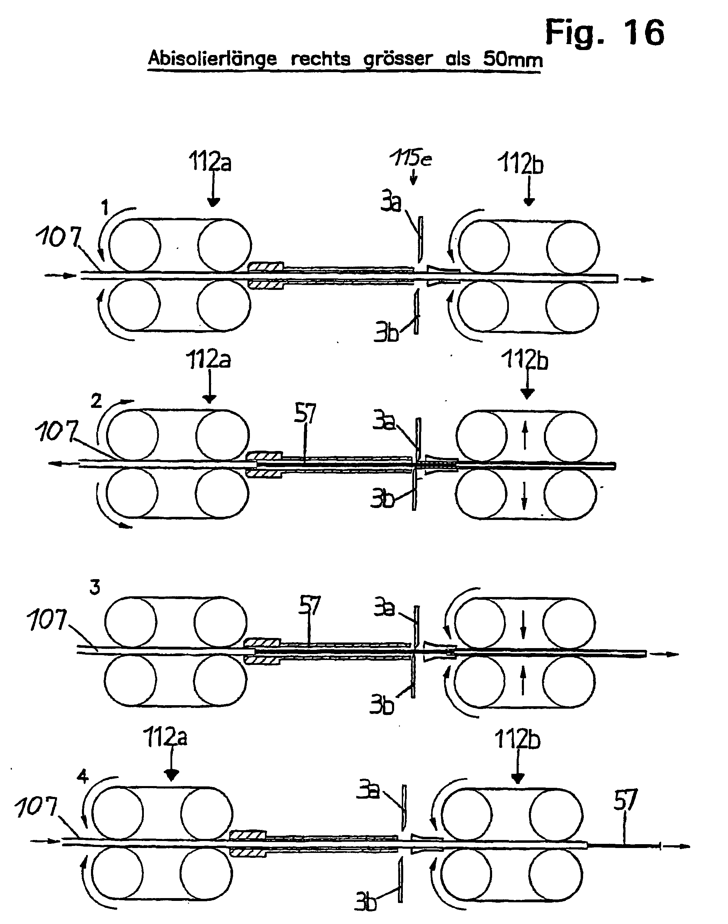

Die in Fig.5a und b gezeigten neuen und vorteilhaften Verfahrensstufen stellen einen dritten - gegebenenfalls auch unabhängig einsetzbaren Aspekt der vorliegenden Erfindung dar. Durch kurze - insbesondere linear -verschiebbare Führungshülsen 40a und b werden die Kabelendstücke jeweils vor dem Einschneiden oder Abisolieren durch die Messer 3a und b zentriert - vorteilhafterweise - in unmittelbarer Messernähe gehalten. Für nicht näher dargestellte Anwendungsfälle ist selbstverständlich im Rahmen der Erfindung auch der Verzicht auf eine der beiden Führungshülsen 40 möglich, insbesondere dann, wenn in der Folge der Band- oder Rollenvorschub näher an die Messer 3 herangerückt wird. Eine weitere Variation ergibt sich durch den möglichen Ersatz einer Führungshülse 40 mit einem Modul D, wie z.B. in Fig.16 angegeben. Der als Modul C symbolisch dargestellte Bandantrieb kann komplett oder partiell mit Rollenantrieben vertauscht werden.

Die erfinderischen Aspekte der Erfindung, die sich nicht unmittelbar auf die seitliche Verschiebbarkeit der Werkzeuge beziehen, gelten in erfinderischer Weise selbstverständlich auch für Messeranordnungen, bei denen mehrere Messer 3 entlang der Kabelachse (Vorschubachse) 106 versetzt angeordnet sind, wie z.B. im Abisoliermodell CCM 2000 der Sutter Electronic AG. Solche Kombinationen liessen gegebenenfalls die Verarbeitungsgeschwindigkeit von Kabeln durch die erfindungsgemässen Verfahrensschritte und verschiebbaren Führungshülsen noch steigern.

Im Rahmen eines alternativen Aufbaus können dementsprechend - insbesondere unter Ausnutzung des Modulaspekts auch mehrere Messermodule F mit seitlich verschiebbaren Messern hinter einander vorgesehen sein. Varianten mit dazwischen angeordneten zusätzlichen Vorschubmodulen A,B oder C liegen ebenso im Rahmen der Erfindung.

Die Erfindung betrifft weiters eine neuartige Mess- und Justiervorrichtung für motorisch zusammenfahrbare Backen, insbesondere Schneidebacken an einer Abisoliermaschine. Das Neue ist die Ausnützung einer gewissen Elastizität zwischen Antriebsmotor und einer Vortriebsspindel, die für den Vorschub der Backen zuständig ist. Die Elastizität kommt durch ein elastische Kopplungsglied zwischen Antriebsmotor und Spindel zustande, insbesondere ein Zahnriemen der über Riemenscheiben das Drehmoment des Antriebes auf die Spindel überträgt. Neu ist weiters, dass an der Spindel direkt ein Messwertaufnehmer, insbesondere ein Encoder (Drehgeber) angebracht ist. Beim Zusammenfahren der Backen wird dem Encoder der Anschlag der Backen dadurch signalisiert, dass die Backen sich nicht mehr weiter zusammen bewegen und die definitive Anschlagstellung somit am Encoder abgelesen oder abgegriffen - bzw. ein Reset signalisiert werden kann. Der Antriebsmotor z.B. ein Schrittmotor kann erfindungsgemäss infolge der Elastizität jedoch geringfügig weiter gegen die Elastizität des Zahnriemens drehen - und sei es nur, seinen Schwung abzufedern, ohne die Backen mechanisch zu belasten.

Auch aus der Tatsache, dass der eine Measwertaufnehmer (an der Spindel) zum Stillstand gekommen ist und der andere (z.B. Schrittmotor) noch geringfügig weiterdrehen kann, kann erfindungsgemäss auf die Schliessposition der Backen geschlossen werden. In Ergänzung oder als Alternative ist im Rahmen der Erfindung denkbar, das Drehmoment des Antriebsmotors in Schliessnähe zu reduzieren, um die mechanische Belastung an den Schliessbacken zu reduzieren.

Ein erfindungsgemässer, optionale Zwischenschritt beim Abziehens unter Zuhilfenahme der rechten Bändern mit gesteuertem Anpressdruck führt vorteilhafterweise zu einem Vollabzug langer Isolierstücke mit dem Vorteil, dass ein Überspringen der Abisoliermesser bei starken Haftkräften zwischen Leiter und Isolierung reduziert wird. Dieses ist jedoch nur bei dünnen Kabeln ein Problem, bei stärkeren und vor allem stärkeren Isolationsdicken kommt es beim Bekannten in der Regel sonst zu einem Blockieren des linken Bandantriebes oder zu einem Schlupf der wiederum zu einer Zerstörung der Kabel oder der linken Bänder führen kann.

Die völlig individuelle Einstellbarkeit und Ansteuerbarkeit der vorderen und hinteren Rollen bzw. Bändern erleichtert die Weiterverarbeitung des Kabels, erfordert allerdings auch ausreichend dimensionierte Antriebsmotore und eine geeignete Software, die nach Kenntnis dieser Patentanmeldung einem Durchschnittsfachmann verständlich und realisierbar wird.

Die bevorzugten Verfahrensschritte gemäss den Schritten 1 bis 8 sind dadurch gekennzeichnet:
1 Einschub des Kabels 107 auf seine vordere Abisolierlänge hinter die Messer 3; Freistellung der hinteren Führungshülse 40b.
2 Schliessen der Messer 3 bis zur Abisoliertiefe und Rückzug des Kabels 7 mittels vorderem Modul C.
3 Positionierung der hinteren Führungshülse 40b, die dabei gleichzeitig - bei Bedarf - das Abfall-Isolationsstück ausstösst, so dass es zu keiner Behinderung im weiteren Ablauf kommt. Gerade dieser Vorgang ist besonders vorteilhaft gegenüber bekannten Lösungen der Firma Eubanks, die zweiteilige Führungshülsen anbietet, die zum Zwecke der Abfallentfernung öffnen und mittels zusätzlicher Mechanik den Abfall ausstossen sollen. Da diese bekannten Aufbauten jedoch danach wieder schliessen, kann es erst recht zu einem Verklemmen von Abfallresten zwischen den Führungshülsenteilen kommen, was erfindungsgemäss entfällt. Als Lösung wurde bei einem anderen Stand der Technik vorgesehen, die Hülsen nach unten offen auszubilden, so dass Abzugsmaterial nach unten herausfallen kann. Der Nachteil bei dieser Konstruktion ist, dass Kabel, insbesondere dünne, flexible, an deren Unterseite nicht geführt sind und es daher zu Störungen beim Betrieb kommen kann. Solche Führungen sind z.B. bei dem Abisoliermodell der Firma Kodera/JP "Kodera 34" geoffenbart.
4 Vorschub des Kabels 107 bis zur Schnittposition unter den Messern 3. Im Falle eines Aufbaus gemäss Fig. 1 oder 2, der für die Anwendung dieses neuen Verfahrens nicht obligatorisch ist, sind die Abisoliermesser 3 und die Trennmesser 3 nebeneinander an den verschiebbaren Messerträgern 1 angeordnet, so dass zwischen Schritt 4 und 5 die Trennmesser 3 in Schnittposition geschoben werden, während in den übrigen Schritten die Abisoliermesser 3 in der dargestellten Position sind.
5 Das Kabel 107 wird durchtrennt.
6 Das zweite Kabelstück 107b wird mittels dem hinteren Vorschubmodul C zurückgeschoben bis zur Abisolierposition des hinteren Kabelendes; die vordere Führungshülse 40a ist freigestellt. Letzteres hat u.a. auch den Effekt, dass ein längeres Kabelendstück abisoliert werden kann, dass die Länge zwischen vorderem Modul c und Messer 3 übersteigt. Dieses Kabelendstück kann nämlich - sofern es flexibel genug ist - abgebogen werden, da es durch die vordere Führungshülse 40a seitlich nicht geführt ist. Der selbe Effekt kann bei Bedarf beim Schritt 1-2 auch beim vorderen Kabelende und der Führungshülse 40b ausgenützt werden.
7 Einschneiden und Abziehen des Isolationsstückes (Kabelmantelabfall oder "Slug").
8 Auswurf des beidseitig abisolierten Kabelstückes 107b und Vorschub des nächsten Kabelstückes 107a gemäss Schritt 1.

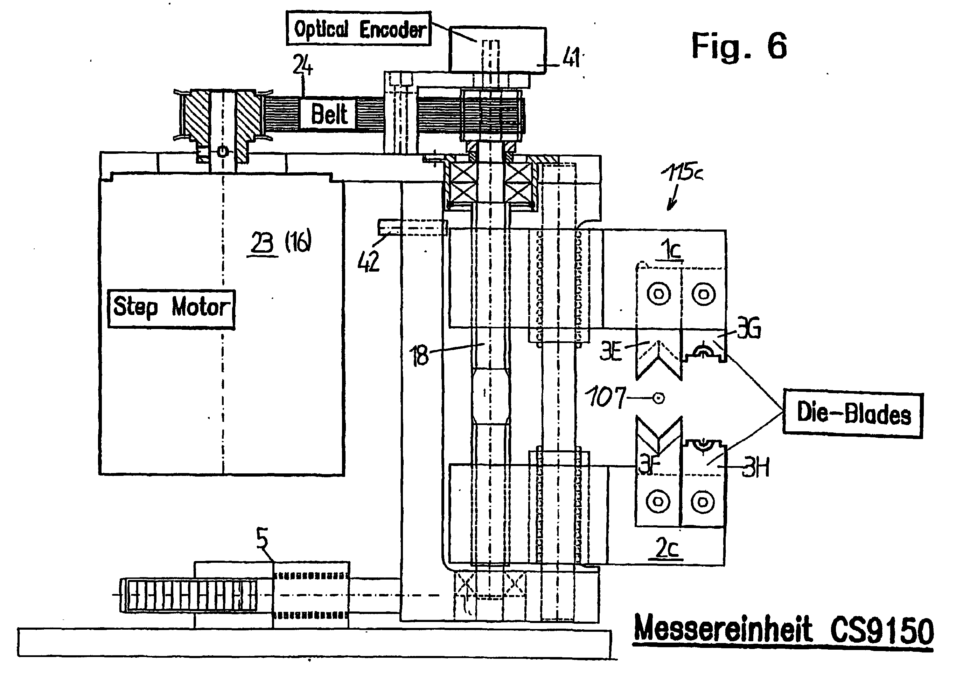

Fig.6 zeigt ein Detail eines erfindungsgemässen Werkzeughaltervorschubs (z.B. Modul E oder F)einer Variante gemäss Fig.2 mit einer Gewindespindel 18, einem Zahnriemenantrieb 24 und dem Schrittmotor 23 zum gesteuerten Antrieb der Schliess- und Öffnungsbewegung der Werkzeuge und einem schematisch angedeuteten Antrieb 5 zum Seitverschieben der Messerhalter 1 und 2. Hinsichtlich der Abisolierschritte 4 und 5 gemäss Fig.5 kommt das Messerpaar 3e und f zum Einsatz, während die Formmesser 3g und h lediglich die Isolation einschneiden und abziehen. Diese Formmesser 3g und h sind vorzugsweise so kompatibel, dass sie sich gegeneinander abstützen und ein Überschneiden dadurch unmöglich ist.

Diese Kompatibilität, wie sie auch schon bei anderen bekannten Abisoliermaschinen bekannt ist, führt zu einem Problem der Justierung, das gemäss einem weiteren, von den übrigen unabhängigen Aspekt der Erfindung erfindungsgemäss gelöst wird. Bei ungenauer Einstellung des Antriebes mit dem Motor 23 bzw. bei unterschiedlichen Messereinbauten an den Messerhaltern 1 und 2 kann es infolge der Motorkraft zu unerwünschten Kräften an der Spindel 18 bzw. den Messerhaltern 1 und 2 kommen, wenn nämlich der Motor 23 bei Anliegen der Messer 3g und h noch weiter Drehmoment aufbringt.

Vermieden wird dieses Problem durch eine Drehwinkelgeber (Encoder) 41 direkt an der Spindel 18. Der Encoder hat zusammen mit einer nicht näher dargestellten Steuerung die Aufgabe, die Drehbewegung der Spindel 18 in Abhängigkeit von der Antriebs bzw. Drehleistung des Motors 23 zu überwachen. Bringt der Motor weiter Drehmoment auf, ohne dass sich die Spindel 18 dreht (keine Änderung des Encoderwertes) erkennt die Steuerung selbsttätig, dass die Messer 3g und h auf Anschlag sind. Die Elastizität des Zahnriemens 24 erlaubt dabei ein gewisses Spiel, das mechanische Überlast an der Spindel vermeidet. Bei einer speziellen Ausführung wird auch der Encoder des Motors 23 - z.B. ein Schrittmotor - zum Vergleich mit dem Encoder 41 benutzt, um die geschlossene Messerstellung zu detektieren. Ein - z.B. induktiver - Initialgeber 42 kann dabei vorgesehen sein, um die offene Position der Messerhalter 1 und 2 zu detektieren.

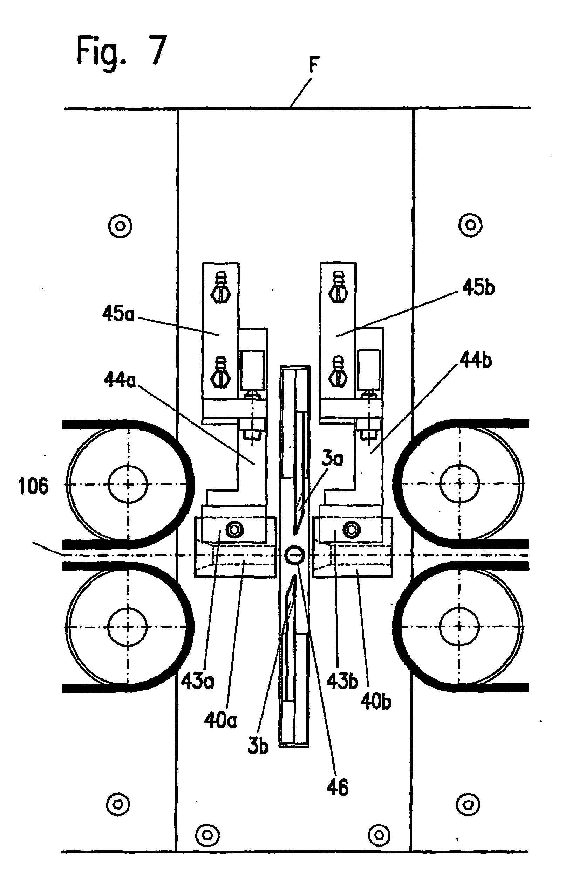

In Fig.7 ist ein Modul F beispielhaft näher dargestellt. Bevorzugt sind die Führungshülsen 40 in Haltern 43 an Führungsstangen 44 gehalten, die rechnergesteuert durch - in diesem Beispiel pneumatische - Antriebe 45 gehoben oder gesenkt werden können. Die Halter ermöglichen erfindungsgemäss ein rasches Wechseln von Führungshülsen 40, um diese an unterschiedliche Kabel anzupassen. Die Führungshülsen 40 sind in ihrem Inneren an einer oder beiden Seiten zur Kabeleinführerleichterung bevorzugt trichterförmig angesenkt. Für bestimmte Anwendungen können sie, wie schon oben erwähnt, mit herkömmlichen Schwenkführungen ersetzt oder auch ganz weggelassen werden. Sie können erfindungsgemäss auch bei beliebigen anderen Abisoliermaschinen erfolgreich eingesetzt werden; z.B. auch bei herkömmlichen rotativen Abisoliervorrichtungen, anstelle von mitrotierenden Zentrierbacken, wie z.B. in den Modellen 207 der Schleuniger Productronic AG oder den zwischenzeitlich vom Markt genommenen Modellen 9200 der Firma Eubanks Monrovia USA. Zwischen den Führungshülsen 40 befinden sich die Messer 3 bzw. Kabelbearbeitungswerkzeuge, sowie gegebenenfalls eine Pressluftausblasöffnung 46 zum Reinigen der Werkzeuge.

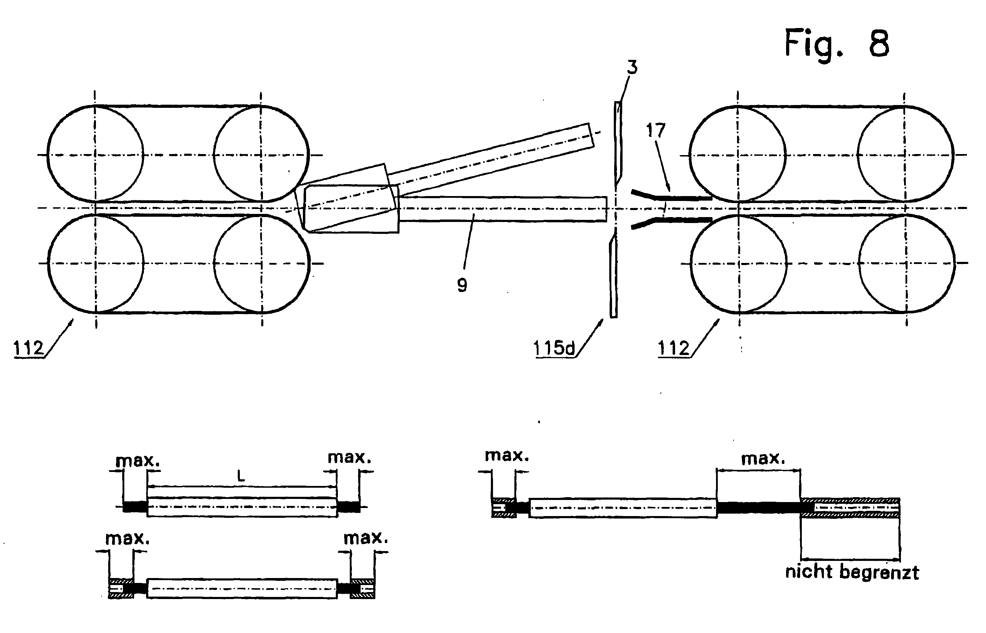

Fig.8 zeigt eine Variante gemäss Modulaufbau 1a (Fig.4) mit grösserem Abstand zwischen vorderem und hinterem Endlosbandantrieb 112 mit Massangaben eines konkreten Ausführungsbeispiels, die um ca. ± 25-75% im Rahmen der Erfindung variierbar sind. Die schwenkbare Führung 9 ermöglicht dabei lange hintere Abisolierstücke, da beim Zurückschieben eines vorderen Kabelabschnittes die Führung 9 nach oben schwenkt und derart den Weg für das hintere Ende des vorderen Kabelabschnittes wenigstens bis zur Länge der schwenkbaren Führung 9 freigibt. Der schwenkbaren Führung 9 ist eine Führung 17 gegenübergestellt, die eventuell lediglich aus einem planen Führungsstück zur Horizontalführung eines Kabels bestehen kann, die jedoch auch verschiebbar sein kann, wie oben beschrieben oder auch starr jedoch austauschbar ausgebildet sein kann, wobei hierfür erfindungsgemäss auch die oben erwähnten Schnappbefestigungen vorteilhaft sind. Die Länge dieser Führungsstücke bzw. der Abstand zwischen den Messern und den Band- oder Rollenantrieben ist normalerweise ausschlaggebend für die geringste verarbeitbare Kabellänge. Erfindungsgemäss gibt es jedoch auch einen speziellen Short-Mode-Betrieb, in dem das zweite Rollen- bzw. Bandpaar ausser Funktion gesetzt wird, um noch kürzere Kabelstücke bearbeiten zu können.

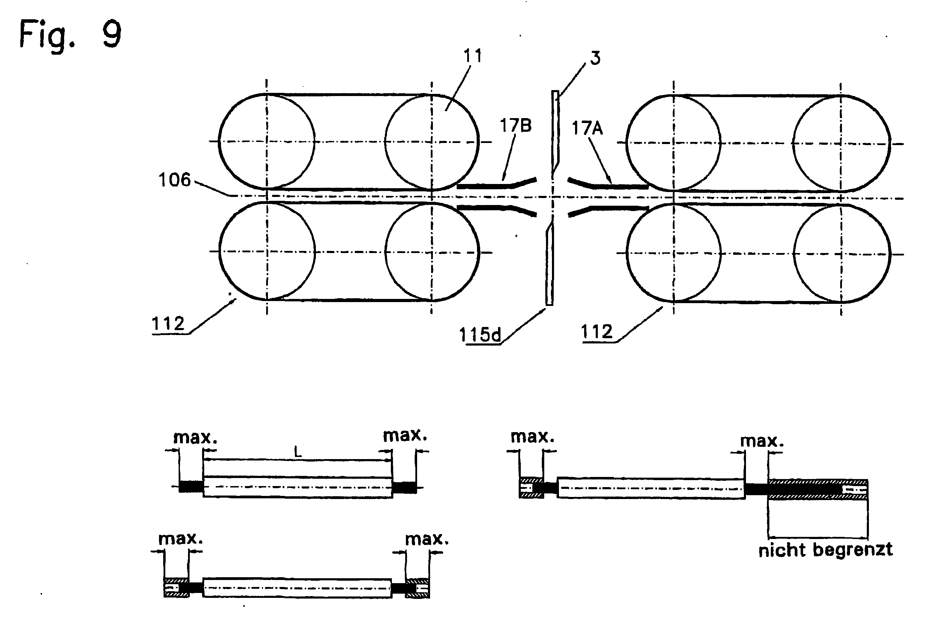

Fig.9 zeigt demgegenüber eine Variante mit verkürztem Abstand, wie z.B. Modulaufbau 3a (Fig.4) und den sich daraus ergebenden Effekten mit Wertangaben, die um ca. ± 25-75% im Rahmen der Erfindung variierbar sind; Selbstverständlich sind die Bandantriebe 112 bei beiden Varianten durch Rollenantriebe 111 ersetzbar.

Bei einem besonderen, neuen, auch unabhängig einsetzbaren erfinderischen Aspekt können die Bandantriebe 112 jedoch auch zum Abziehen der durchtrennten Kabelmantelstücke eingesetzt werden, wobei durch die erfindungsgemässe Anpressdrucksteuerung der Bandantriebe 112 in Abhängigkeit vom Kabelaufbau bei geschlossenen Abisoliermessern, die das Kabel somit halten, die jeweiligen Bänder - in der Regel wird dies des hintere Bandpaar sein - den Kabelmantel in Abzugsrichtung weiterfördern. In einer besonderen Variante können dabei auch die vorderen Bänder in Gegenrichtung laufen und derart mithelfen, in kürzerer Zeit den Leiter aus dem Mantel zu ziehen.

Als weitere Verfahrensvarianten sind erfindungsgemäss Teilabzüge möglich mit anschliessendem Vollabzug mit Hilfe der Bandantriebe, wie eben beschrieben.

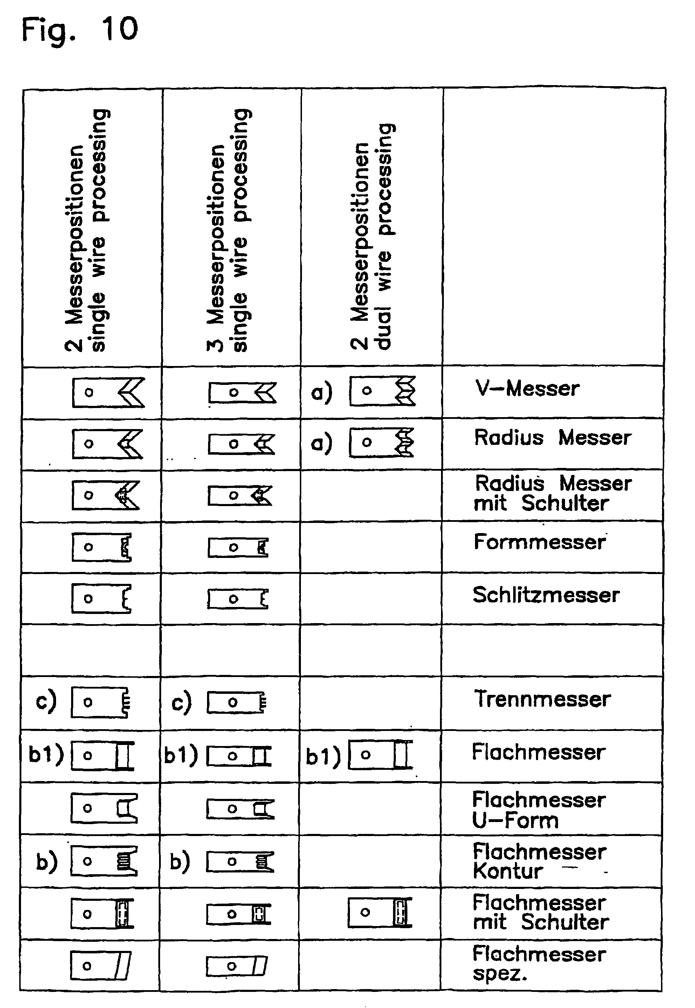

Die Funktionsweisen der Messerausbildungen gemäss Fig.10 sind im wesentlichen dem Fachmann bekannt; besonders herausgehoben werden daher nur die Aufbauten a-c:

Bei besonderen Aufbauten a) können mit der erfindungsgemässen Vorrichtung parallel auch mehrere Kabel verarbeitet werden, was zu einer grösseren Effektivität führt. Erfindungsgemäss sind dazu dann auch parallele Führungen 40 oder Schwenkführungen 9 vorgesehen.

Der besondere Aufbau gemäss b) dient dem Abisolieren von Flachbandkabeln, die im Rahmen der Erfindung ebenso verarbeitet werden können. Hierzu werden zum Durchtrennen bevorzugt die Flachmesser gemäss b1) verwendet.

Die Variante mit den Messern c) dient ebenso den Flachbandkabeln, wobei letztere damit auch aufgetrennt werden können.

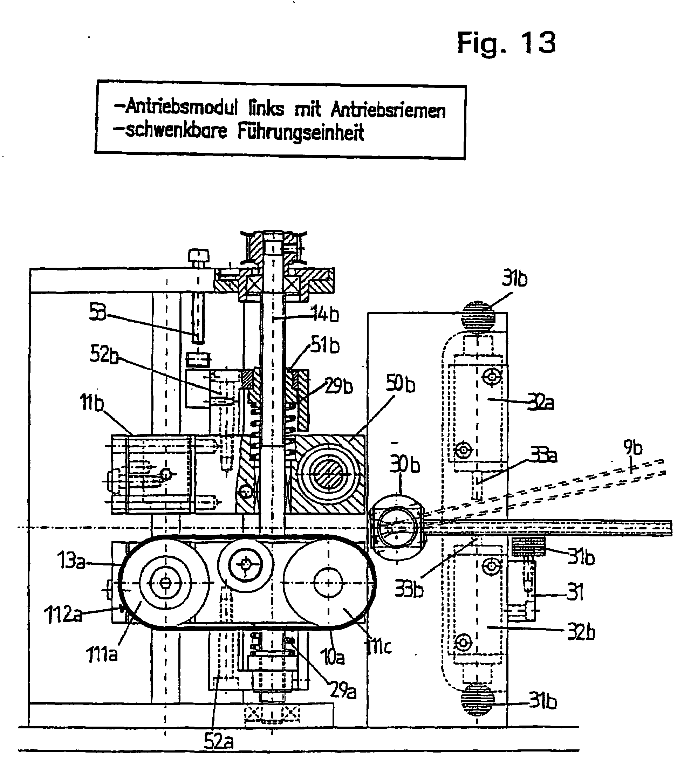

Die Draufsicht gemäss Fig.11 ist kompatibel zur Ansicht gemäss Fig.13. Ein vorderer Bandantrieb 112a mit seinen Antriebsrollen 111b und d fördert ein Kabel entlang der Achse 106 zur verschwenkbaren Führung 9. Diese verfügt über ein Führungsrohr 9b, das auswechselbar in einem Schwenkkörper 30b gehalten ist. Der Schwenkkörper 30b ist mit einer Kurbelstange 34 verbunden, die die Schwenkbewegung vom Antrieb 33 auf das Rohr 9b überträgt, während dem Schwenkkörper 30 bzw. der Kurbelstange 34 eine Anschlag 31 mit Gummipuffer 31b zur Abdämpfung zugeordnet ist, da bevorzugt die Längsführung 9 mittels schnellwirkenden Verschiebemagneten 32 angetrieben wird, der mit seinem Stössel 33, der gegebenenfalls ebenso mittels Gummipuffer abgedämpft ist, die Führung 9 schlagartig beschleunigt.

Die Kurbelstange ist bei vorliegenden Ausführungsbeispiel zweiteilig ausgebildet, wobei ein Zylinderstift 34a in einer Drehwelle 34b und die wiederum in einem Lager 35 gehalten ist, die mit dem Schwenkkörper 30b verbunden ist. Bei Bedarf kann diese Schwenkführung auch federbelastet sein und/oder um die Achse 106 um 90 oder 180 Grad gedreht angeordnet sein, so dass die Führung 9 nicht nach oben, sondern seitlich oder nach unten ausschwenkt.

47 bezeichnet einen Verstellantrieb für den Bandantrieb 112, der über einen Riemen 48 die Spindel 14b dreht.

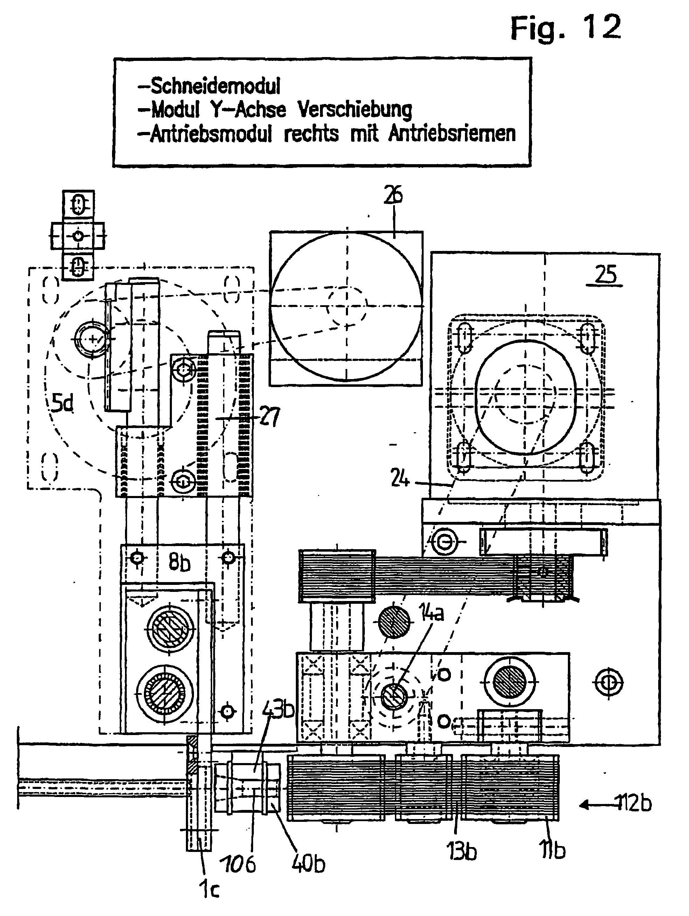

Fig.12 zeigt den rechten Teil desselben Ausführungsbeispiels, wobei 25 den Antrieb und 24 den Riemen für die Einstellung der Spannkraft des Endlosbandantriebes darstellt und mit 26 der gesteuerte (Schritt)motor bezeichnet ist, der das gesteuerte Seitführen der Werkzeughalter 1,2 in den Linearführungen 27 ermöglicht.

Die Führung 40b ist bei dieser Ausführungsvariante nicht verschiebbar jedoch mittels Halter 43b leicht entfernbar gehalten. Ein gemeinsamer, mittels Antrieb 5d verschiebbarer Halteteil 8b trägt die Werkzeughalter 1.

Aus Fig.13 ist ein Detail des Bandantriebes 112a für die neue Vorrichtung mit einem Endlosbandpaar 112 mit Bändern (Zahnriemen) 13, Rollen (Zahnrollen) 111a,c und Andrückrollen zu sehen. Die oberen und unteren Bänder sind voneinander vollständig separierbar. Der Anpressdruck zwischen den Bändern 13 steuert sich über die Druckfeder 29, die den Antriebsrollenhaltekörper 50 in Schliessrichtung vorspannt. Die Vorspannung wird erhöht, indem bei sich berührenden oberen und unteren Bändern 13 die Spindel 14b weiter in Schliessrichtung gedreht wird, so dass die Stellmutter 51b die Feder 29 weiter komprimiert. Beim Öffnen der Bandantriebe, z.B. für eine Voröffnung zur Vermeidung des verletzenden Anstossens eines Kabels an die Bänder 13, nimmt die Stellmutter 51b den Antriebsrollenhaltekörper 50b über den Mitnahmeteil 52b mit.

Die Öffnungsbewegung ist mittels justierbarem Anschlag 53 begrenzt. In dieser Position wird vorzugsweise gleichzeitig die Schliessbewegung initialisiert. Die Steuerung erfolgt dabei entweder über einen nicht gezeigten Drehencoder an der Welle 14b oder über den gesteuerten Antrieb 47 gem. Fig.11.

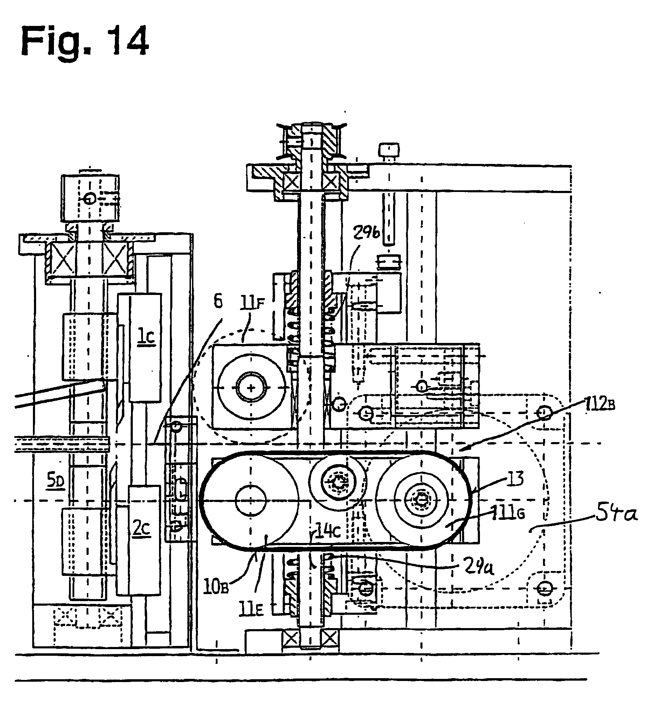

In der Variante gemäss Fig.14 ist der Antriebsmotor 54 für den Bandantrieb strichliert dargestellt, der bevorzugt ebenso encodergesteuert ist, da er die Abisolierlängen mitbestimmt.

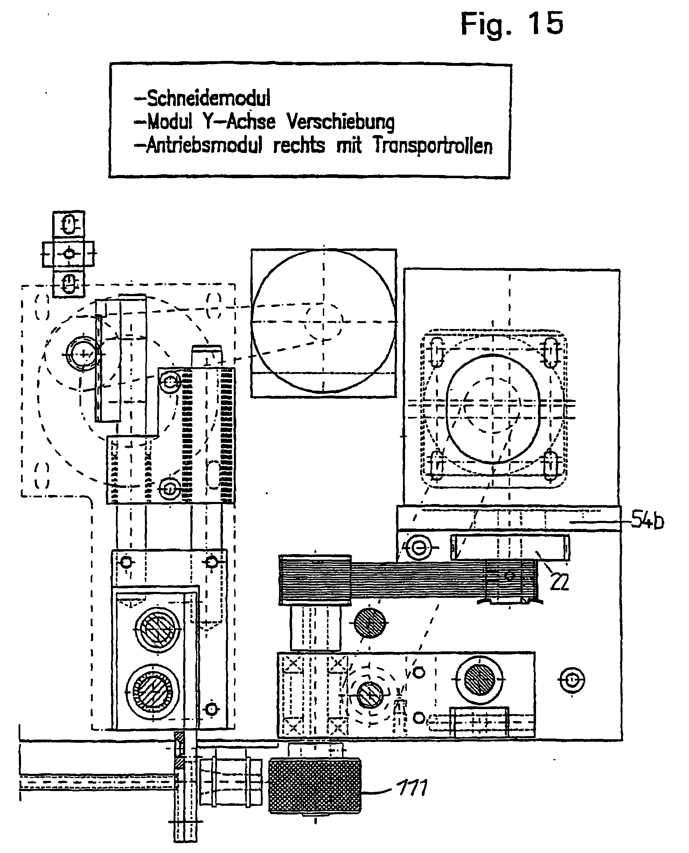

Fig.15 zeigt eine Variante zu Fig.12 mit einem Rollenantrieb mit Rollen 111, die über ein Getriebe 22 bzw. 21 von einem Antrieb 54b angetrieben sind. Die Öffnungsverstellung der Rollen entspricht jener der Bandantriebe 112.

Fig.16 bezieht sich auf ein weiteres neues und erfinderisches Verfahren zum Abisolieren von Kabeln, das bevorzugt mit den oben beschriebenen Aufbauten, aber auch mit anderen bekannten Maschinen neu durchgeführt werden könnte. In vier Verfahrensschritten wird ein Kabel 107 mit einem besonders langen Abisolierstück abisoliert:
1 Einschieben das Kabels 107 durch Antriebsrotation der Bandantriebe 112 bis zur Abisolierposition unter den Messern 3.
2 Öffnen des rechten Bandantriebes 112b bis auf den Kabeldurchmesser, so dass das Kabel gerade noch zentriert gehalten wird, jedoch ohne einen Anpressdruck auf dieses auszuüben. Gleichzeitig Einschneiden der Messer 3 auf die Abisoliertiefe; Rückzug des Kabels 107 durch Rückzugsrotation des Bandantriebes 112a bis etwa zu der Position, in der dieser Bandantrieb 112a noch nicht den blanken Leiter 57 berührt. Dieses wäre eine Abisolierlänge, die bisher nur mit aufwendigen Teilabzugsschritten erzielt werden konnte.
3 Klemmung des Kabels 107 durch den Bandantrieb 112a und Abziehrotation des Bandantriebes 112b unter geeignetem Anpressdruck auf den Kabelmantel, so dass dieser vom Leiter 57 vollständig abgezogen wird. Gegenüber dem Bekannten ist somit neu auch ein vollabzug mit einer dargestellten Abisolierlänge möglich.
4 Der Fachmann erkennt, dass weitere Schritte möglich wären.

Ein besonderes Verfahren zum Ansteuern der oben beschriebenen Abisoliervorrichtungen bzw. auch andere Abisoliervorrichtungen, die nicht unter den Geltungsbereich der obigen Ausführungen fallen, ist ebenfalls Gegenstand dieser Anmeldung.

Dem Verfahren liegt die Aufgabe zugrunde, an sich bekannte Verfahren zur Ansteuerung von Abisoliervorrichtungen zu verbessern, insbesondere zu beschleunigen, so dass interne Abläufe optimiert und gewisse Funktionen automatisiert und gegebenenfalls die Eingabe noch erleichtert wird.

Bekannte Verfahren zur Ansteuerung verfügen über eine Software, die für die Verarbeitung spezieller Kabel (z.B. Koaxkabel) die Möglichkeit bot, jede einzelne Operation, d.h. jeden Verfahrensschritt, jedes einzelne Vorschieben oder Zurückziehen z.B. des Kabels oder der Messer, jedes Schwenken eines schwenkbaren Kabelführungsteiles etc. von Hand einzugeben, die Software somit so zu programmieren, dass sie danach die Maschine entsprechend ansteuerte. Dies erforderte für jede neue Detail-Aufgabenstellung bei der Abisolierung eines speziellen Kabels ein "komplettes" Programmieren des ganzen Abisoliervorganges. Dieses ist zeitaufwendig und kann auch infolge Irrtümer fehlerbehaftet sein.

Die vorliegende Erfindung löst dieses Problem erstmals befriedigend durch das Einführen von Operationsgruppen, die Verfahrensschritte zusammenfassen und selbsttätig gewisse Einstellungen gruppenweise vornehmen. Jede Verfahrens-(schritt-)gruppe löst eine häufig gebrauchte Aufgabe, die aus mehreren einzelnen Verfahrensschritten besteht. z.B. das sukzessive Einschneiden und Vorschieben eines dreistufigen Kabels an einer Seite mit einstellbaren Abisoliertiefen.

Gemäss einer Weiterentwicklung dieses Verfahrens sind die einzelnen Verfahrensschritte in einer Operationsgruppe bzw. die damit verbundenen Werte auf 0 setzbar bzw. durch willkürlich bestimmbare andere Werte ersetzbar, so dass daraus eine neue, alternative Operationsgruppe erzeugt werden kann. Derart ist es dem Anwender möglich, sich jedes spezielle Kabel als eine Gruppe von Operationsgruppen in einer Datenbank anzulegen, in der er später einfach mit einem Befehl das Kabel anwählen kann.

Gemäss einer Weiterentwicklung dieser Erfindung können solche Operationsgruppen auch überlappend (z.B. zu grösseren Operationsgruppen) zusammengeschlossen werden, um komplexere Abisolieraufgaben (z.B. Kabel mit ausserordentlich vielen Abisolierstufen) - automatisch - zu lösen.

Es ergeben sich somit modulartige Verfahrensschrittblöcke, die jeder für sich bevorzugt frei programmierbar sind.

Im Regelfall muss daher ein Anwender bei einem Kabelwechsel nur mehr das eine oder andere Kabel in der Datenbank anwählen, um die Abisolierung des Kabels wunschgemäss anzusteuern.

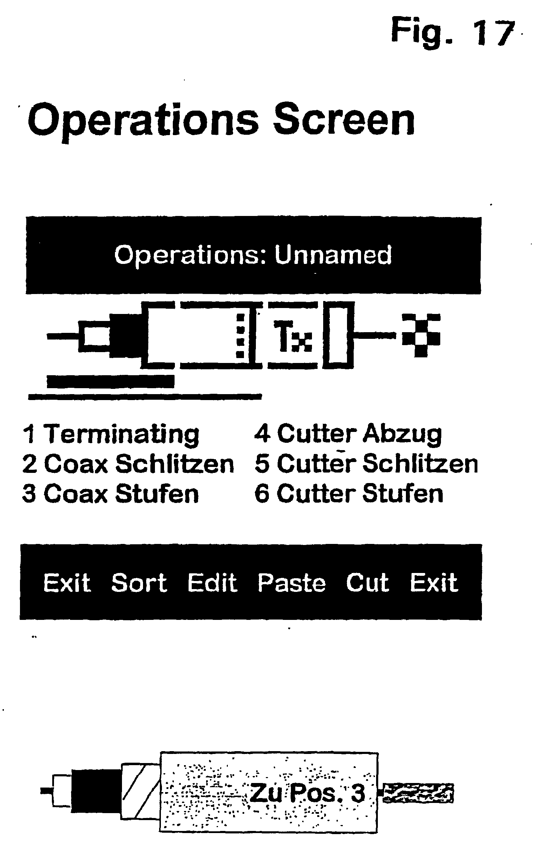

Gemäss einer besonderen Ausbildung der Erfindung werden die Programm-(modul-)gruppen auf einem Display dargestellt. Fig.17 zeigt ein Beispiel einer solchen Darstellung zusammen mit dem Schema eines gewünschten abisolierten Kabelstückes. Schematisch ist auf dem Display das Kabel bzw. dessen Bearbeitungs-Operationsgruppen dargestellt. Eine Menueleiste ist ebenso vorgegeben.

Ganz links im Schema sieht man einen völlig normalen dreistufigen Abzug. Daran schliesst die vierte Stufe des Abzugs an, bestehend aus einem geschlitzten Fenster ohne linkes Ende und ohne Schlitz, dessen Teilabzug eine grosse Länge aufweist. Als nächste Operation erhält man einen Text. Diesem folgt das rechte Ende: Vollabzug. Dieser wird gebildet aus einem Mehrfachabzug in einem Stück (es gibt andere Möglichkeiten, dies ist jedoch die empfohlene). Dieses Ende wird zusätzlich von einem externen Gerät bearbeitet (z.B. gekrimpt).

Die einzelnen Operationen werden also schematisch hintereinander dargestellt. Dabei werden gegebenenfalls die einzelnen Operationssymbole nicht vollständig dargestellt, sondern jeweils diejenige Auswahl, die der Benutzer durch die Eingabe der Parameter wählte. Das Kabel enthält höchstens am Ende Leerteile. Besteht es aus weniger Operationen, so wird es einfach kürzer. Sehr viele Operationen können dazu führen, dass das Kabel gescrollt wird. Dabei wird jeweils um ca. die Hälfte eines Bildschirms gesprungen. Die Darstellung ist weder in X noch in Y massstabgetreu.

Unter dem Kabel sind zwei Balken dargestellt. Der obere, dicke Balken zeigt an, welche Operation z.Z. vom Benutzer angesteuert wird (Wählen anderer Operationen s. unter Tasten, Enter und Back): Der (evtl. die) dünnere(n) zeigen, welche weiteren Operationen z.Z. angesteuerte überschneiden. Dabei werden solche, die gar nicht überschneiden, nicht angezeigt (wie der Text); weitere, die irgendwo innerhalb der ersten enden, enden in der Mitte; solche die am gleichen Ort enden, wie der dicke Balken, enden ebendort; und solche, die gar darüber hinaus reichen (wie der Abzug der äussersten Schicht) reichen auch über den dicken Balken hinaus. Es werden bis zu zwei Überschneidungen pro Seite angezeigt, auf weitere wird durch drei Punkte auf der entsprechenden Seite hingewiesen. Operationen, die ganz unter einer anderen liegen, werden als Strich halber Länge in der Mitte der anderen Operation angezeigt.

Darunter ist das Auswahlmenu für die Operationen eines Endes dargestellt. Details zu den Menüs sind beispielhaft wie folgt belegt:

Es stehen verschiedene Menüs zur Auswahl. Das eine (Enden-Menü) wird aktiviert, wenn der Benutzer auf einem Ende des Kabels steht. Das andere (Mittelteil-Menü) wird aktiviert, wenn der Benutzer nicht auf einem Ende des Kabels steht. Liste der Operationen und der dadurch ansteuerbaren Funktionen s. weiter unten. Wird eine der entsprechenden Tasten gedrückt, so wird eine neue Operation eingefügt.

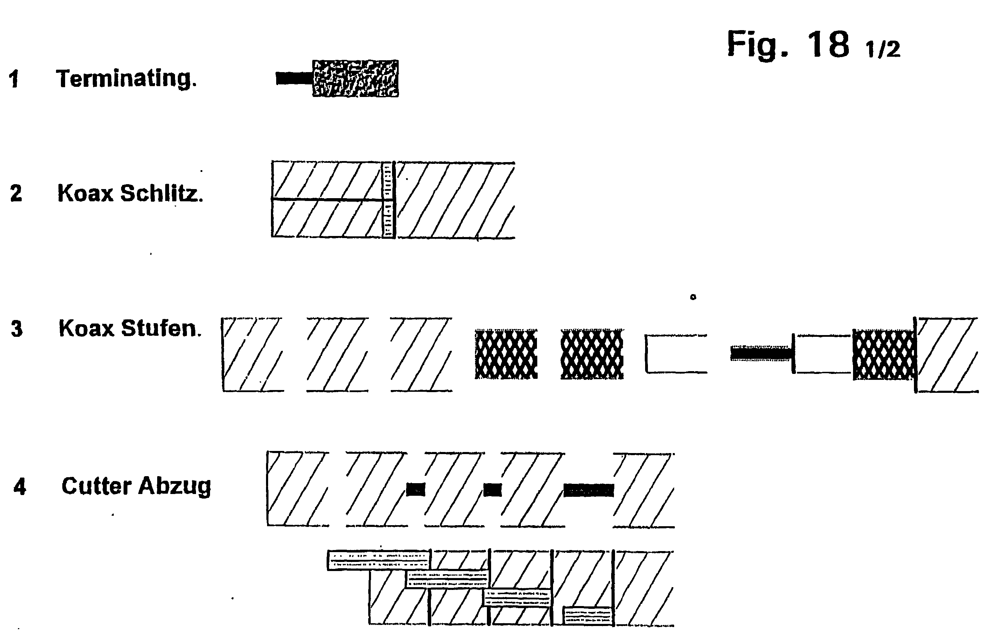

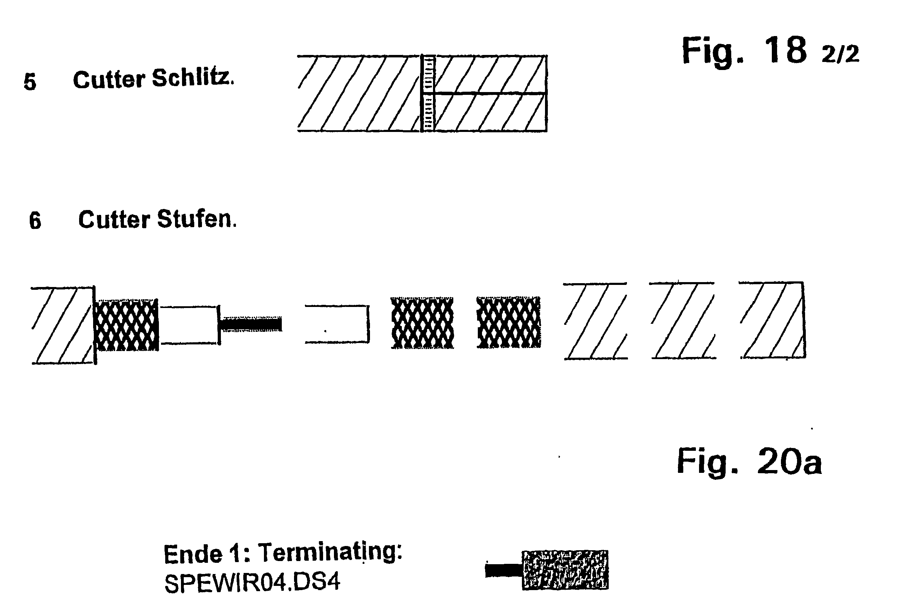

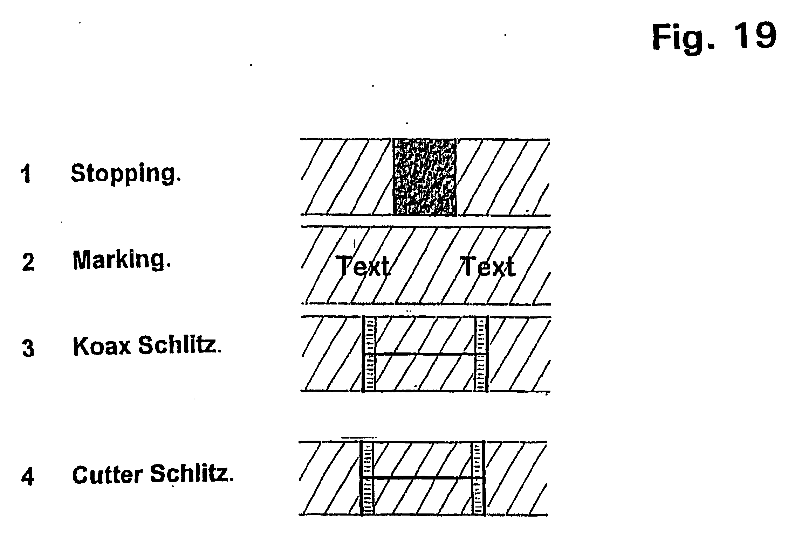

Fig. 18 zeigt und beschreibt beispielhaft und symbolisch mögliche Operationsgruppen für die Kabelendbearbeitung, während Fig. 19 beispielhafte Auskunft über Operationsgruppen für den Mittelteil angibt.

Fig. 8 zeigt eine universelle Führung 17 (nur horizontal geführt). Diese wird bei Bedarf dem Kabeldurchmesser angepasst. Eine wegschwenkbare Führung 9 wird bei Bedarf dem Kabeldurchmesser angepasst).

Die dargestellten Kabelstücke beziehen sich auf folgende verarbeitungsmöglichkeiten: Verarbeitung in short mode, wenn L kleiner als 52mm, Verarbeitung in spez. mode, wenn Abisolierlänge rechts grösser als 50mm ist. Die Isolation kann auch in mehreren Teilschnitten abgezogen werden. Vorteil dieser Variante: Sie ist schneller als die Variante gem. Figur 9 und sie erlaubt eine grössere Abzugslänge links und rechts. Nachteil dieser Variante: Ausschwenken des Kabels mit Führung 9. Kurze Koax-Kabelstücke können nicht verarbeitet werden.

Fig. 9 zeigt ebenso beidseitig je eine universelle Führung 17 (nur horizontal geführt). Sie wird dem Kabeldurchmesser angepasst. Sie können wegschwenkbar sein. Die dargestellten Kabelstücke beziehen sich auf folgende Verarbeitungsmöglichkeiten: Verarbeitung in short mode, wenn L kleiner als 52mm; Verarbeitung in spez.mode, wenn Abisolierlänge rechts grösser als 50mm ist. Die Isolation kann in mehreren Teilschnitten abgezogen werden. Vorteil dieser Variante: kein Ausschwenken des Kabels; Verarbeitung kürzerer Koax-Kabel ist möglich. Nachteil: langsamer als Variante gem. Fig. 8; max. 50mm Abzugslänge auf der linken Seite; max. 50mm Vollabzug auf der rechten Seite.

Die in Fig. 17 am beispielhaften Bildschirm angegebenen Bearbeitungsmöglichkeiten sind in der Fig. 18 symbolisch dargestellt. Bei den Vorgängen ergeben sich dabei erfindungsgemäss folgende Besonderheiten:
1) Terminating: Hält an, bis das Eingangssignal (Robotik) eine abgeschlossene Verarbeitung anzeigt.
2) Koax Schlitz: Wird immer angezeigt; die Bearbeitung findet jedoch nur statt, wenn in den Systemparametern auch eine Koaxbox eingestellt ist. Dies ist so, damit man schnell einen Blick auf Koaxdrähte werfen kann, auch wenn man gerade nicht Koax bearbeitet. Unter Koaxbox versteht der Fachmann ein Zusatzmodul mit rotierenden Messern zum Einschneiden von Koaxialkabeln.
3) Koax Stufen: Kann für Abzüge bis zu drei Stufen (vier Schichten) verwendet werden. Auch der Abzug für die entsprechenden Stufen kann hier definiert werden.
4) Cutter Abzug: Erlaubt einen mehrfachen Abzug (ohne Koax, wobei Koax Operationen 'unabhängig' davon an die gewünschte Stelle plaziert werden können). Es kann sich dabei aber auch um einen einteiligen Anzug handeln - sowohl Voll, als auch Teilabzug sind möglich. Ebenso können multiple Windows (freie Fenster im Kabel) definiert werden. Die Grafiken zum Cutter Abzug zeigen das Verfahren zuerst als Vorgehen, darunter als Resultat.
5) Cutter Schlitz: Erlaubt die Definition eines geschlitzten Endes mit Anreissen der Isolation zum leichteren Entfernen.
   Da jede einzelne Operation weggelassen werden kann, stehen so diverse Möglichkeiten zur Auswahl (s. unten). Dieses Verfahren ist analog zum Vorgang 2, wobei jedoch statt der Koax-Box der Messerkopf benutzt wird.
6) Cutter Stufen: Kann für Abzüge bis zu drei Stufen(vier Schichten) verwendet werden. Auch der Abzug für die entsprechenden Stufen kann hier definiert werden. Wie Vorgang 3 jedoch wird statt mit der Koax-Box mit dem Messerkopf eingeschnitten.

Die Operationsgruppen im Mittelteil gemäss Fig. 19 erlauben ihre Positionierung jeweils ausgehend vom linken oder rechten Ende. Dabei ergeben sich folgende erfindungsgemässen Besonderheiten:
1) Stopping: Hält an, bis das Eingangssignal eine abgeschlossenen Verarbeitung anzeigt.
2) Marking: Setzt einen Bereich mit einer Anzahl von Texten. Dabei kann auch ein einzelner Text gesetzt werden.
3) Koax Schlitz: Erlaubt die Definition eines geschlitzten Fensters mit beidseitigem Anreissen der Isolation zum leichteren Entfernen.
4) Cutter Schlitz: Erlaubt die Definition eines geschlitzten Fensters mit beidseitigem Anreissen der Isolation zum leichteren Entfernen. Da jede bei 3 und 4 einzelne Operation weggelassen werden kann, kann dies vielseitig verwendet werden. Wie bei Vorgang 3 wird jedoch statt mit der Koax-Box mit dem Messerkopf eingeschnitten.

Verschiedene erfindungsgemäss Grundoperationen für die Enden sind in den Fig. 20a-e dargestellt:

Fig. 20a zeigt symbolisch eine Grundoperation.

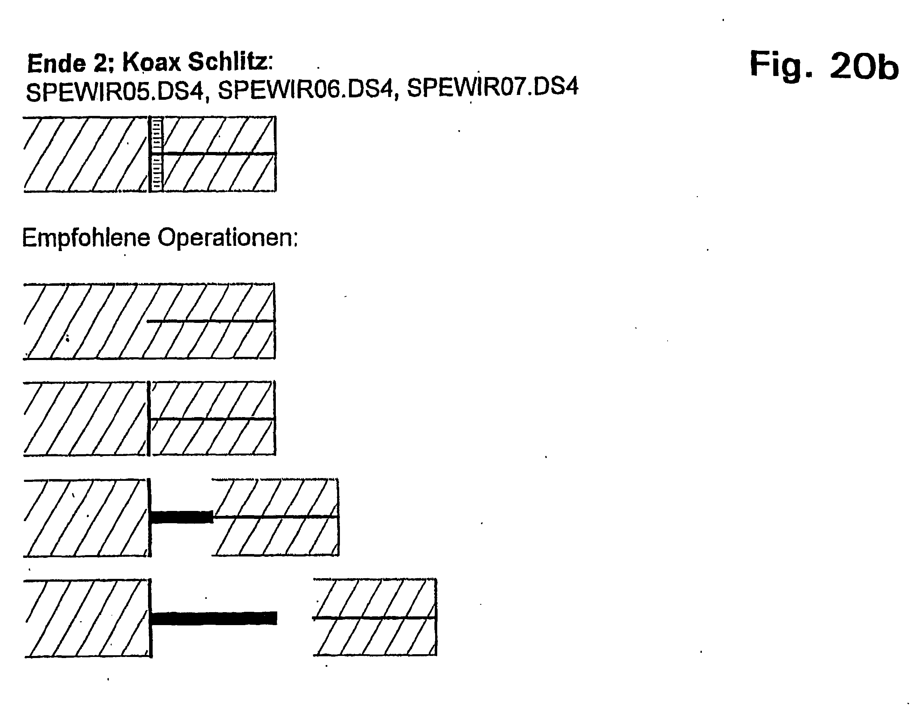

Fig. 20b zeigt im oberen Bild eine Grundoperation mit koaxialem Einschnitt, Längsschnitt und Abzug mit dem Messerkopf, wobei die mit SPE beginnenden Codes kabelund/oder operationsgruppenspezifisch sind.

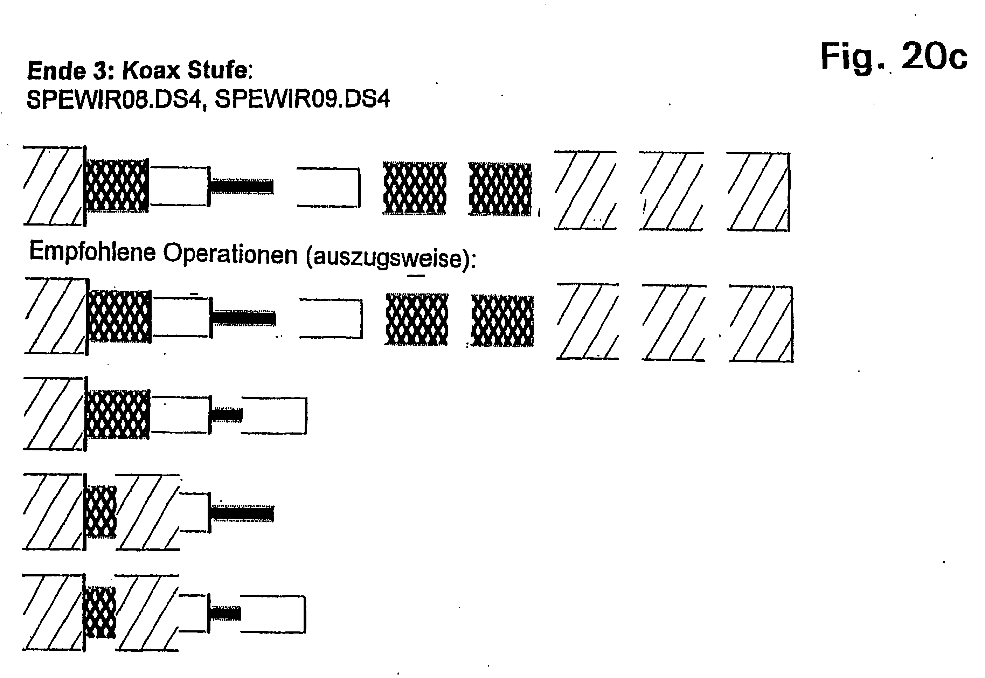

Fig. 20c zeigt eine Grundoperation mit erstem koaxialem Einschnitt, zweitem koaxialem Einschnitt, dritten koaxialem Einschnitt und die entsprechenden Isolations- bzw. Lagenabzüge beginnend vom Bild mit dem flachsten Einschnitt bis zum Abzug mit dem nächst tieferen Einschnitt bis zum Abzug mit dem tiefsten Einschnitt. Darunter sind auszugsweise die empfohlenen Operationen symbolisch angegeben.
Weitere Varianten sind: Auch zwei- oder einstufig einzuschneiden bzw. einzelne Schnitte und zugehörige Abzüge wegzulassen bzw. Weglassen jedes einzelnen Abzuges aller der insgesamt sechs möglichen.

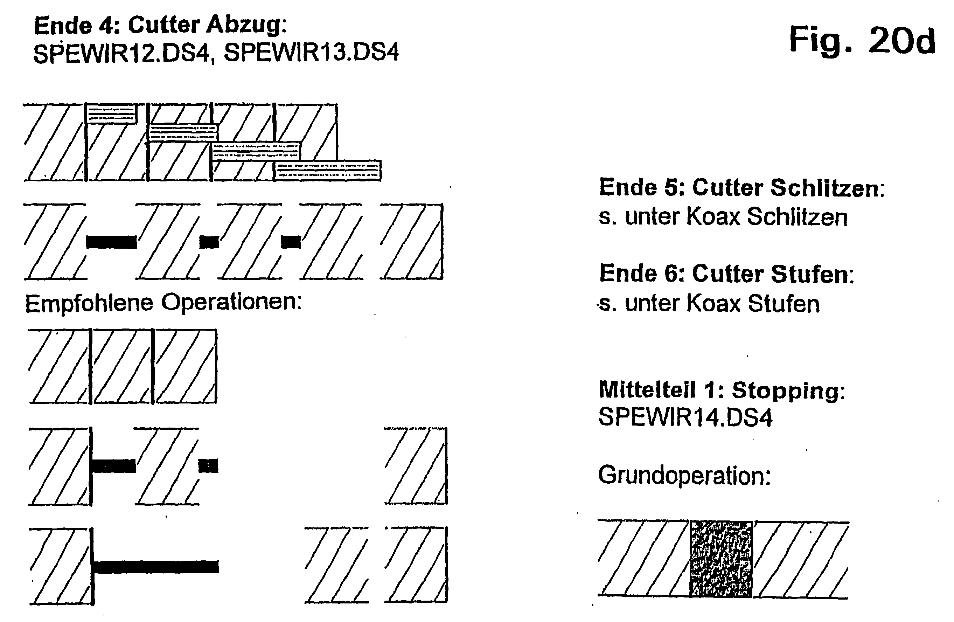

Die Fig. 20d zeigt eine weitere Grundoperation zum Cutterabzug mit folgenden Schritten: 1. äusserer Einschnitt, 2. Abzug zum äussersten Einschnitt, 3. nächster Einschnitt, 4. Abzug zu diesem Einschnitt,.... Dabei sind folgende Parameter einzugeben: Erste Einschneidposition, Länge aller Stückchen(nur ein Wert), Länge des ersten Abzuges, Länge aller übrigen Abzüge (nur ein Wert).

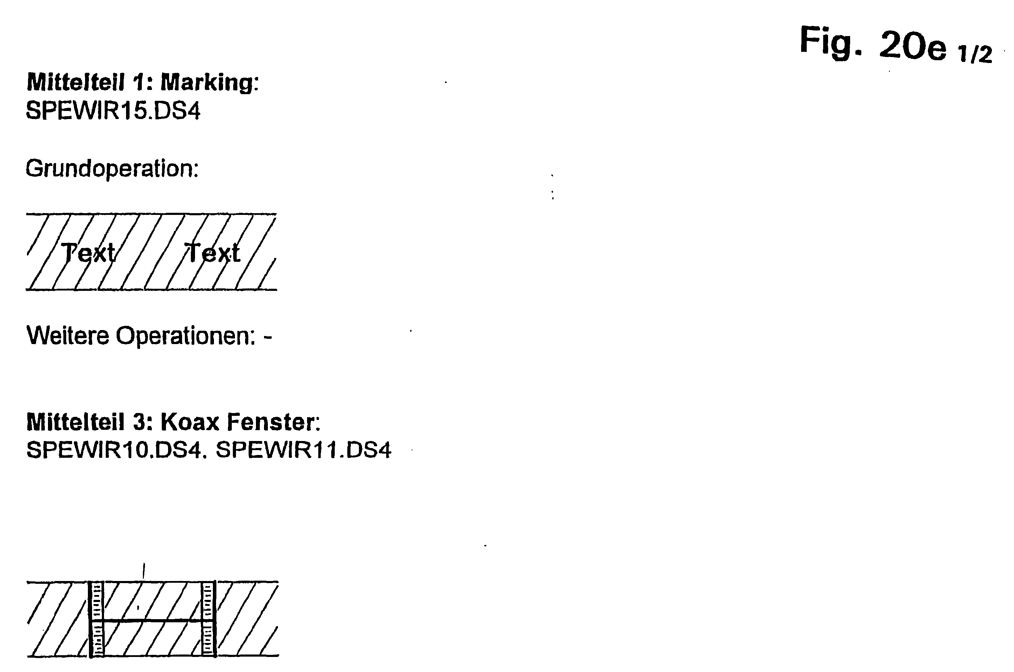

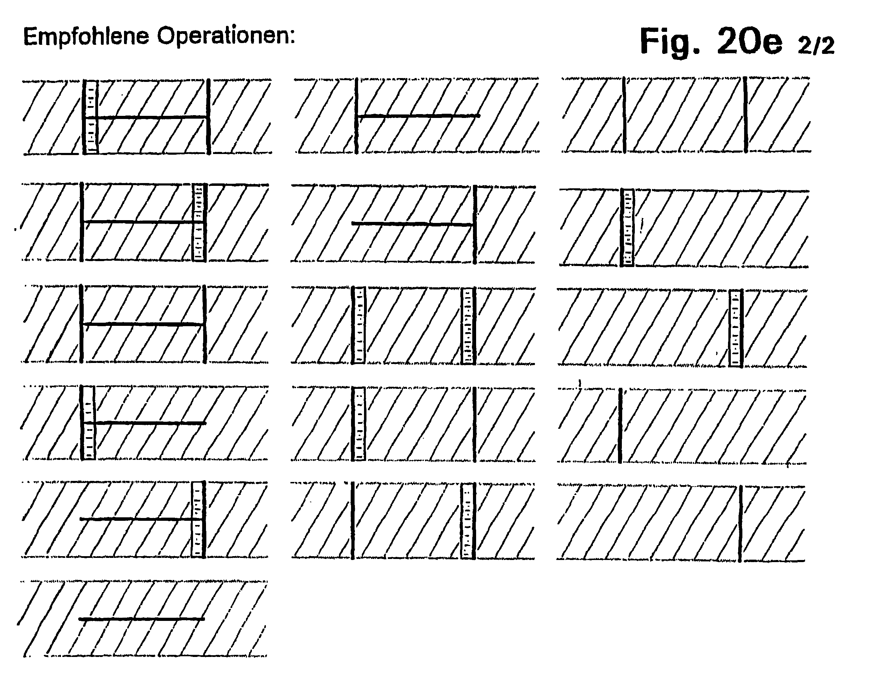

In der Fig. 20e ist im oberen Bild eine symbolische Grundoperation für das Markieren dargestellt. Im unteren Bild ist eine weitere erfindungsgemässe Operation symbolisch dargestellt. Es handelt sich dabei um einen Vorgang koaxial Fenster mit den folgenden Verfahrensschritten: 2. rechter Koax Einschnitt, 2. linker Koax Einschnitt, 3. Längsschlitz, 4. rechter Abzug mit dem Messerkopf, 5. linker Abzug mit dem Messerkopf.

Anhand der beispielhaften Figur 22, die für die unterschiedlichen Erfindungsaspekte nicht einschränkend ist, wird:ein schematisches Ausführungsbeispiel für den Quertransport von Kabeln zu anderen Weiterbearbeitungsstationen dargestellt. Die Figur zeigt dabei eine perspektivische Darstellung, die einige Komponenten einer Kabelbearbeitungsvorrichtung - für den Fachmann verständlich - schematisch zeigt.

Auf der Fig.22 sind zum Bewegen und Halten eines Kabels 107 eine erste und eine zweite Transporteinrichtung 112, 113 einer Kabelfördervorrichtung dargestellt. Die Kabelfördervorrichtung umfasst nebst den Transporteinrichtungen 112 und 113 etwa eine Kabelrolle mit dem Kabelvorrat, eine Führungseinrichtung zum gezielten Zuführen des Kabels 107 von der Kabelrolle zur ersten Transporteinrichtung 112 und eine Aufnahmevorrichtung zum Aufnehmen der abgelängten und an den Enden bearbeiteten Kabelstücke von der zweiten Transporteinrichtung 113. Die beiden Transporteinrichtungen 112,113 umfassen je zumindest zwei Rollen die von einander gegenüberliegenden Seiten gegen das Kabel 107 pressbar sind und von denen zumindest eine antreibbar ist, so dass das Kabel 107 entsprechend der Drehrichtung vorwärts, bzw. vom Kabelvorrat weg, oder rückwärts bewegbar ist. Bei stillstehenden Rollen wird auch das Kabel 107 bewegungsfrei gehalten.

In der dargestellten Ausführungsform umfassen die Transporteinrichtungen 112 und 113 je ein oberes und ein unteres Band 4 und 5. Diese Bänder sind jeweils um zwei Rollen 6 geführt. Von einem oberen und einem unteren zusammenwirkenden Bandpaar ist zumindest ein Band in beide Richtungen antreibbar. Dazu ist etwa eine der Rollen 6 oder eine weitere auf das Band wirkende Rolle mit einem Antrieb verbunden. Die Rollen 6 des Bandes 4, bzw. 5 sind je an einem Rollenrahmen 7 drehbar gelagert. Die Rollenrahmen 7 sind ihrerseits in u-förmigen Halteschlitten 8 senkrecht zur Kabellängsachse parallel verschiebbar gelagert. Durch die Bewegung eines Rollenrahmens 7 mit den Rollen 6 des oberen Bandes 4 nach oben, bzw. nach unten, und entsprechend eines Rollenrahmens 7 mit den Rollen 6 des unteren Bandes 5 nach unten, bzw. nach oben, kann der Aufnahmebereich für das Kabel 107 vergrössert, bzw. verkleinert werden. Zur Betätigung der Verschiebungen der Rollenrahmen 7 und zum Erzielen eines Anpressdruckes zwischen den Bändern 4, 5 und dem Kabel 107 sind vorzugsweise zwischen dem Halteschlitten 8 und jedem Rollenrahmen 7 Betätigungselemente 9 angeordnet.

Jeder Halteschlitten 8 ist quer zur Kabellängsrichtung von einer Führung geführt entlang einer Bahn bewegbar. Die dargestellte Ausführungsform sieht für jeden Halteschlitten 8 eine Geradführung in der Form einer Schiene 10 vor, in deren Führungsprofil 10a ein entsprechendes Führungsteil des Halteschlittens 8 eingreift. Um die Halteschlitten 8 entlang der Schienen 10 zu bewegen, ist beispielsweise je ein Schrittmotor 11 vorgesehen, der jeweils mit einem Antriebsrad 12 ein Kabel 13 in Bewegung versetzt. Das eine Ende des Kabels 13 ist direkt mit dem Halteschlitten 8 verbunden und das andere Ende ist über eine Umlenkrolle 14 mit der entgegengesetzten Seite des Halteschlittens 8 verbunden, so dass ein Endlosband entsteht mit dem der Schlitten 8 in beide Richtungen bewegbar ist.

Es versteht sich von selbst, dass anstelle von Geradführungen für die Halteschlitten 8 gegebenenfalls auch Schwenkführungen vorgesehen werden können. Die Führungseinrichtung zum gezielten Zuführen des Kabels 107 vom Kabelvorrat zur ersten Transporteinrichtung 112 muss für die möglichen Verschiebungs- oder Schwenk-Bewegungen der ersten Transporteinrichtung 112 gewährleisten, dass das Kabel 107 nicht mehr als erwünscht gekrümmt wird. Gegebenenfalls wird die Kabelrolle mit dem Kabelvorrat zusammen mit der ersten Transporteinrichtung 112, bzw. deren Halteschlitten 8, bewegt, so dass das Kabel 107 immer gleich in die erste Transporteinrichtung 112 gelangt.

Zwischen der ersten und der zweiten Transporteinrichtung 112 und 113, bzw. den Schienen 10 derselben, ist zumindest eine Messerstation 115 und beispielsweise eine weitere Bearbeitungsstation 16 oder 17 angeordnet. Zur Erzeugung von Kabelteilstücken 107a,b wird das Kabel 107 von der ersten Transporteinrichtung 112 durch die Messerstation 115 zur zweiten Transporteinrichtung 113 geführt. Zwei Schneidwerkzeuge 3 können zum Durchtrennen des Kabels 107 zusammenbewegt werden. Dabei umfasst die Messerstation 115 etwa einen Messerrahmen 19 in dem die Schneidwerkzeuge 3 geführt sind und an dem Bewegungselemente 20 zum Betätigen der Schneidwerkzeuge 3 befestigt sind. Um das Kabel 107 von der ersten Transporteinrichtung 112 geführt dem Schneidbereich zuzuführen, ist gegebenenfalls eine Zentrierführung 21 vorgesehen, die gegebenenfalls mittels einer Linearführung 22 am Messerrahmen 19 bewegbar ist. Die Verschiebbarkeit der Zentrierführung 21 ermöglicht es das Kabel 107 mit oder ohne Zentrierführung 21 dem Schneidbereich zuzuführen. Wenn der Schneidbereich auch Teilbereiche zum Abisolieren umfasst, so kann die Zentrierführung 21 beispielsweise parallel mit der ersten Transporteinrichtung 112 verschoben werden. Vorzugsweise sind beidseits der Schneidwerkzeuge 3 Zentriervorrichtungen vorgesehen, wobei es beim Abstreifen der Isolation zweckmässig ist, wenn das freie Drahtende nicht in einer Zentrierführung 21 liegt. Die Betätigung der Zentrierführung 21 erfolgt mit einem Verstellantrieb 23.

Um die Verarbeitungszeit auch mit einer Messerstation 115 zum Trennen und Abisolieren relativ zu verkleinern, werden die Schneidwerkzeuge 3 vorzugsweise mit einem zentralen Trennbereich und beidseits davon je mit einem Abisolierbereich versehen, so dass nach dem Trennen die beiden entstandenen Drahtenden durch Bewegungen der Transporteinrichtungen 112, 113 in entgegengesetzten Richtungen je einzeln einem Abisolierbereich zuführbar sind. Zum Abisolieren werden die beiden Drahtenden je um eine gewünschte Länge durch die Messerstation 115 vorgeschoben. Anschliessend werden die Schneidwerkzeuge 3 zum Trennen der Isolationsschicht zusammengeführt und zum Abstreifen der Isolation werden beide Drahtenden von den Transporteinrichtungen 112, 113 wieder aus der Messerstation 115 zurückgezogen. Die kürzere Verarbeitungszeit ergibt sich aufgrund der gleichzeitigen Bearbeitung beider Drahtenden, die durch die seitliche Verschiebung der Drahtenden gegeneinander ermöglicht wird. Um beliebige Abisolierlängen zu ermöglichen, wird die seitliche Verschiebung vorzugsweise so gewählt, dass die vorgeschobenen Drahtenden seitlich an den gegenüberliegenden Transporteinrichtungen 112,113 vorbei bewegbar sind. Gegebenenfalls ist jeder Transporteinrichtung 112, 113 ein seitlicher Auflagebereich zugeordnet, auf dem das vorgeschobene Kabelende der Gegenseite aufliegend geführt ist, so dass es auch bei grossen Abisolierlängen nicht unerwünscht nach unten durchgebogen wird.

Analog zur gleichzeitigen Bearbeitung der beiden Kabelenden 107a,b in seitlich versetzten Abisolierbereichen der Schneidwerkzeuge 3 kann auch eine gleichzeitige Bearbeitung in beliebigen anderen seitlich, bzw. quer zur Kabellängsrichtung, versetzt angeordneten Bearbeitungsstationen 16, 17 ermöglicht werden. Durch die seitliche Verschiebbarkeit der Transporteinrichtungen 112,113 wird eine gleichzeitige, bzw. parallele Bearbeitung ermöglicht. Zudem können die Bearbeitungsstationen 16, 17, die lediglich von einer Seite her für ein Kabelende 107a, beispielsweise durch eine Einführöffnung 16a zugänglich sind, beliebig lang sein, bzw. sich auch seitlich entlang einer Transporteinrichtung 112, 113 erstrecken, ohne dass dies einen Einfluss auf den Abstand zwischen den beiden Transporteinrichtungen 112,113 hat.

Eventuell wird während der Bearbeitung des einen Kabelendes 107a,b das andere jeweils zurückgezogen und das Bearbeitungswerkzeug wird quer zur Kabellängsrichtung zum Kabel 107 bewegt. Diese Bearbeitungsweise ermöglicht aber nur eine serielle Bearbeitung, der bei der Trennung entstehenden Kabelenden 107a,b. Indem sich diese besondere erfindungsgemässe Lösung von der Einschränkung auf die Bearbeitung im Bereich einer einzigen festen Kabelachse 106 löst, kann die Bearbeitung beschleunigt und vereinfacht werden. Die Beschleunigung wird durch die parallele Bearbeitung gewährleistet. Die Vereinfachung ergibt sich dadurch, dass zum Erzielen einer Bewegungsfreiheit des in Bearbeitung befindlichen Kabelendes 107a keine Bewegungen des anderen Kabelendes 107b durchgeführt werden müssen.

Es versteht sich von selbst, dass anstelle der, oder zusätzlich zur, seitlichen Bewegbarkeit der Transporteinrichtungen 112, 113 auch eine Bewegbarkeit nach oben und unten vorgesehen werden kann. Das heisst, es können Stationen beliebig um eine zentrale Achse, bzw. eine Messerstation verteilt angeordnet werden, wobei die Transporteinrichtungen 112, 113, bzw. deren Führungseinrichtungen gewährleisten müssen, dass die Kabelenden 107a,b den Bearbeitungstationen zuführbar sind. Die Bewegung eines Kabelendes 107a,b nach oben, bzw. unten, kann gegebenenfalls durch die Bewegung der Rollenrahmen 7 im Halteschlitten 8 nach oben, bzw. unten, erzielt werden. Zudem ist gegebenenfalls zumindest eine Transporteinrichtung 112, 113 auch in der Kabellängsrichtung verschiebbar, so dass beispielsweise auf eine Zentrierführung 21 verzichtet werden kann, weil der Austrittsbereich der Transporteinrichtung 112, 113 unmittelbar zum Eintrittsbereich der Bearbeitungsstation 115,16,17 führbar ist.

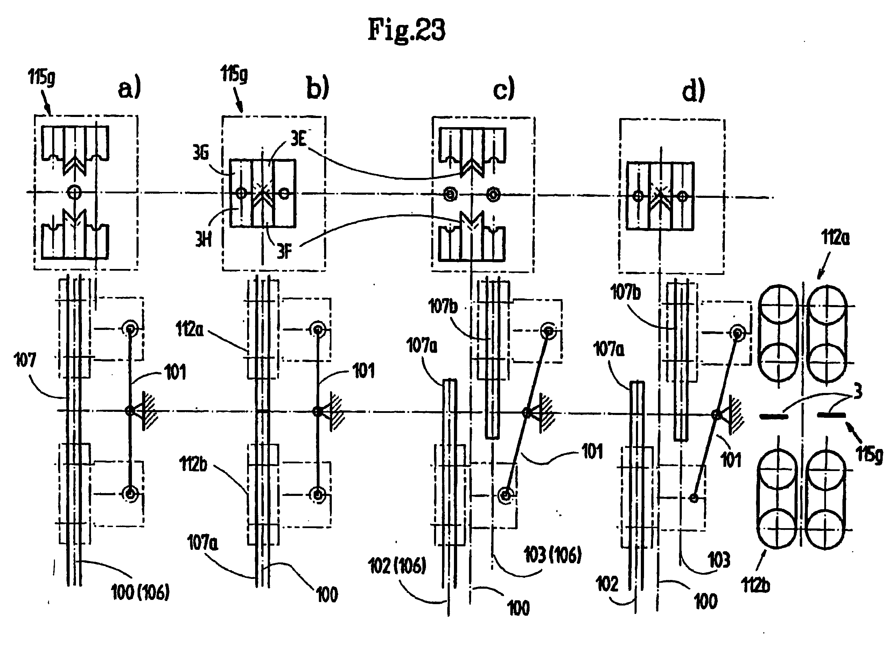

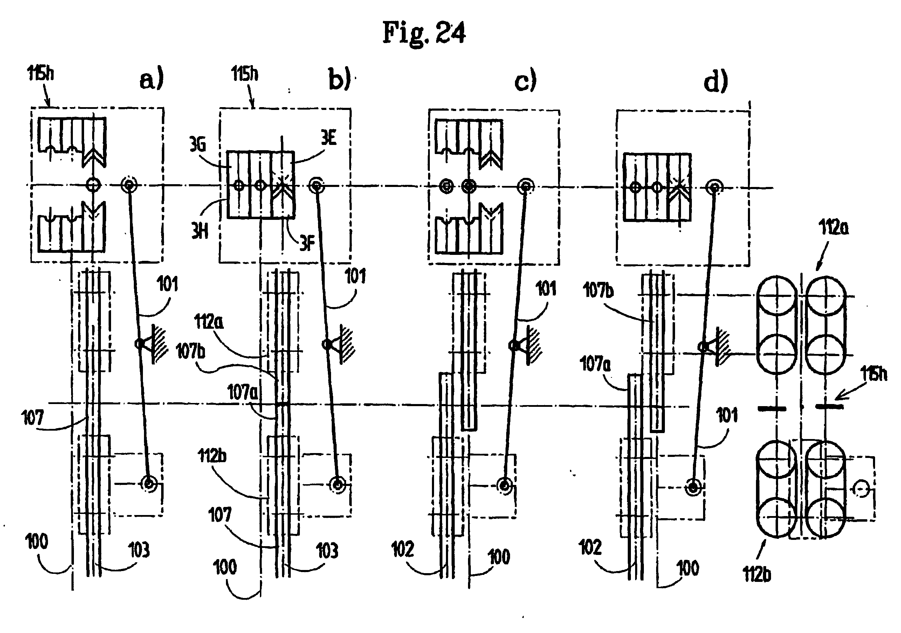

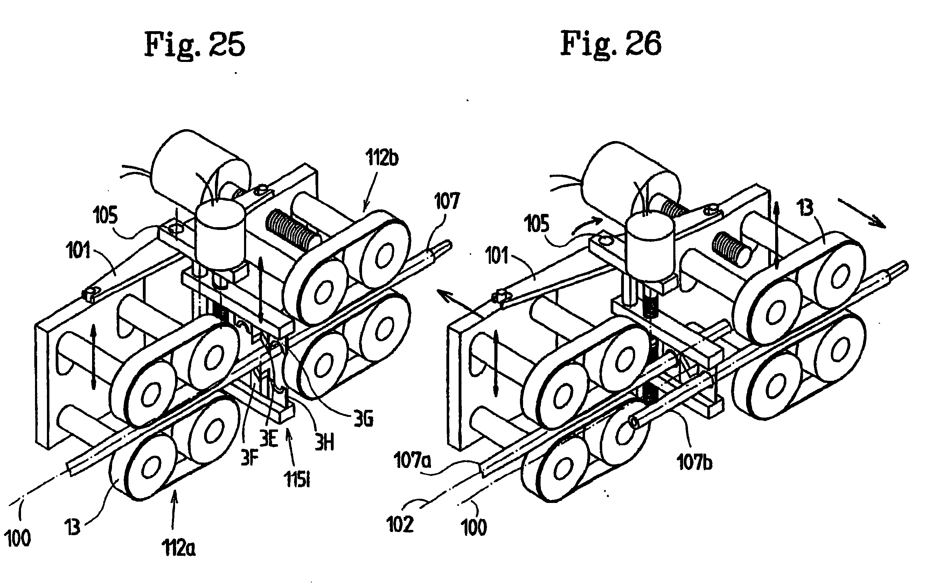

Die schematischen Darstellungen der Fig.23 und 24 sprechen für sich, wobei bei Fig.23 der Hebel 101 ein beliebiges Stellglied zwischen den Transporteinrichtungen darstellt. Als Beispiel für ein solches Stellglied dient die Gabel gemäss Fig.25 und 26.

Fig.24 zeigt demgegenüber ein beliebiges Stellglied 101 zwischen einer Transporteinrichtung 112b und einer Messerstation 115h. Durch gleichzeitiges Bewegen der Transporteinrichtung 112b und der Werkzeuge, lässt sich Quertransportzeit sparen.

Insbesondere auch Fig.26 verdeutlichen eine zeitsparende Abisoliermethode durch gleichzeitiges Abisolieren des vorderen und hinteren Kabelendes 107a und 107b. Dabei baut dieser Aufbau kürzer als ein Aufbau mit einer Dreimesseranordnung hintereinander, wie z.B. Eubanks Modell 9800.

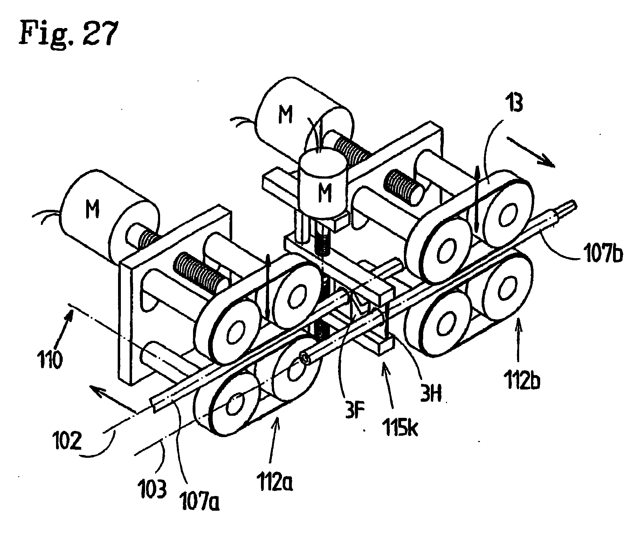

In Fig.27 ist ein unabhängiger Quertransport, z.B. entlang einer Antriebsrollenachse 110 für die Transporteinheit 112a dargestellt. In den Fig.25-27 deuten die Doppelpfeile die Bewegbarkeit der Antriebselemente zu und voneinander an.

Die weiteren Figuren 28-33 beschreiben einen anderen erfindungsgemässen Aufbau, der insbesondere als "Rotativbox" bei Endloskabelverarbeitungsmaschinen zum Einsatz gelangt. Er wird dabei in der Regel als Modul angebaut und zusätzlich zu den bei solchen Maschinen meist nicht drehbaren Messern - insbesondere V-Messern - eingesetzt, um besonders harte Isolationen oder mehrstufige Abisoliervorgänge bei Koaxialkabeln zu erleichtern. Die bei diesem Aufbau erforderliche Längenmessung erfolgt in der Regel bei den Antriebsrollen oder Antriebsbändern des Endloskabels, die sich beidseitig der Rotativbox befinden und ausser dem Vorschub auch Einspann- und gegebenenfalls Zentrierfunktion übernehmen. Die Figuren 28-33 sind ebenso zusammenhängend und übergreifend beschrieben.

Über einer starren Hülse 027 ist eine hohle Backenwelle 022 angebracht, die über eine Kupplung mit Bremsscheibe 001 mit einem Zahnrad 024 verbunden ist, das mittels Zahnriemen antreibbar ist. Die Backenwelle 022 überträgt das Drehmoment des Zahnrades auf einen Spiralflansch 012, der über einen Zapfen mit Zentrierbacken 013 im Eingriff steht. Da die Zentrierbacken 013 in einer Backenführung 011 geführt sind, bewirkt eine Drehung des Spiralflansches 012 ein Zueinanderoder Auseinanderschieben der Einspann- bzw. Zentrierbacken 013. Mittels Stellmutter 029 kann eine Druckfeder 025 vorgespannt werden, die die Bremskraft zwischen Bremsscheibe 001 und erstem Zahnrad 024 beeinflusst. Die Bremskraft entscheidet dabei über den Anpressdruck der Zentrierbacken 013 auf die Aussenseite eines Kabelmantels. Die Zentrierbacken 013 sind'im Schnitt L-förmig ausgebildet, so dass sie eine sehr kompakte Bauweise ermöglichen und trotzdem eine breite Zentrier- bzw. Einspannfläche für abzuisolierende Kabel bieten. Ihre Enden ragen bis unmittelbar neben die Messer. Darüber bieten sie jedoch infolge ihrer L-Form eine Freistellung für allfällige Führungen o.dgl.

Koaxial zur Backenwelle 022 ist ein Lagerflansch 008 angeordnet, der Lager 041 trägt. Die Lager 041 lagern einen Messerkopf, der Keilbrieden 018 aufweist, die im Bereich eines Kopfflansches 017 mit Keilen 016 ausgestattet sind, die mit gegengleichen Messerhaltern 015 kooperieren. Die Messerhalter 015 sind in einer Messerführung 010 geführt. Eine Spindel 006 treibt axial eine Mutter 005; dadurch ist über ein Lager 042 auch die Keilbriede 018 längs angetrieben. Die Spindel 006 ist durch ein zweites Zahnrad 020 antreibbar, das einen Positionsindikator 003 aufweist, dessen Gegenstück mit der Mutter 005 verbunden ist. Ein Zylinderstift 044 drehsichert die Mutter 005, so dass eine Rotation des zweiten Zahnrades 020 zu einer axialen Verschiebung der Mutter 005 und damit eine axiale Verschiebung der Keile 016 bewirkt. Diese Verschieben beaufschlagt die Messerhalter 015 in Schliess- öder Öffnungsrichtung. Im Rahmen der Erfindung liegen jedoch auch andere, dem Fachmann bekannte Schliess- bzw. Öffnungsvorrichtungen für Messer bzw. Backen

Fig. 29 zeigt eine Draufsicht auf die erfindungsgemässe Rotativbox 057 in Montagestellung links und in Abisolierstellung rechts. Strichliert ist der weitere Aufbau einer Endloskabelabisoliervorrichtung 058 z.B. Schleuniger Abisoliermaschine CS 9100 oder eine neue, erfindungsgemässe Maschine CS 9150 angedeutet. Das Ausschwenken aus der Abisolierstellung in die Montagestellung ermöglicht einen besseren Zugang zu der Rotativbox 057 um beispielsweise das Messerwechseln zu erleichtern. Das Ausschwenken ermöglicht somit ein erfindungsgemässes rasches Arbeiten. Das Modul 057 ist dabei an einem Scharnier 059 gehalten, das mit dem Rahmen der Endlosabisoliervorrichtung 058 verschraubt ist. Eine herkömmliche Verrastung sichert das Modul 057 in der Abisolierstellung. Dieser Erfindungsgedanke ist nicht allein auf Roativboxen eingeschränkt sondern umfasst sämtliche Module einer Endlosabisoliermaschine.

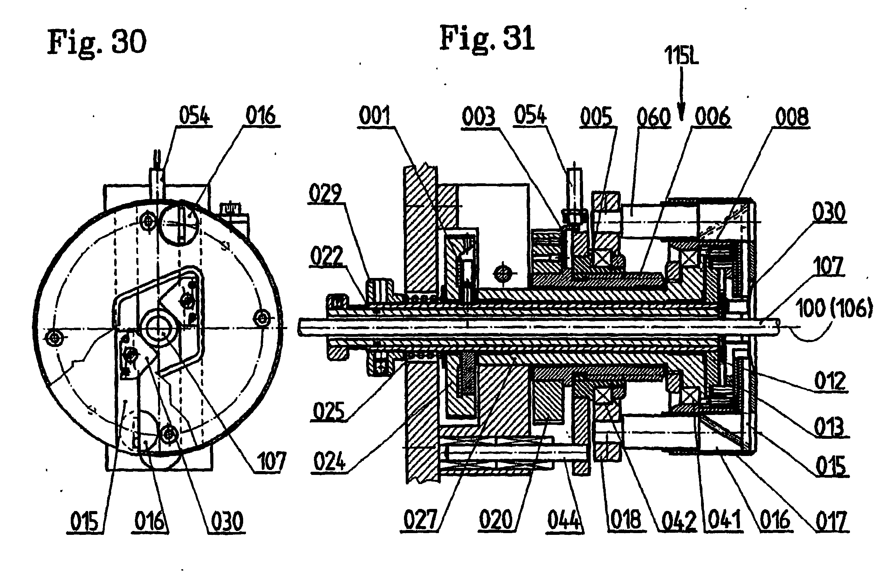

In der Fig. 28 ist eine Schrägansicht auf die erfindungsgemässe Rotativbox 057 dargestellt, bei der die Abisoliermesser in Nullstellung (geschlossen) sind. Demgegenüber ist die Darstellung in Fig. 30 und 31 mit geöffneten, d.h. zurückgezogenen Keilen 016 dargestellt. Weitere beschreibende Informationen können der Bezugszeichenliste entnommen werden.

In der vorliegenden Anmeldung wird insbesondere immer auf Einspann- Zentrier- bzw. Messerbacken Bezug genommen. Im Rahmen der Erfindung liegen jedoch auch Aufbauten, die nicht ausschliesslich auf Backen abgestellt sind, sondern beispielsweise auch andere als backenförmige Zentrier- bzw. Abisoliereinrichtungen umfassen. Für das Zentrieren könnten beispielsweise auch trichterförmige Einrichtungen, für das Durchtrennen auch Lasermesser, um die eigene Achse rotierende scheibenförmige Messer o.dgl., zum Einsatz gelangen. Die im Zusammenhang mit der Fig.22 beschriebenen bzw. dargestellten Bauteile, wie Antriebe, Führungen usw. sind - dem Fachmann verständlich - auch bei den Gegenständen der Fig.23-27 anwendbar.

Obwohl nicht näher angegeben, ist dem Fachmann hinsichtlich der verschiedenen seit 1985 von Schleuniger AG auf den Markt gebrachten automatischen Abisoliermaschinen jedoch klar, dass bevorzugt eine Steuervorrichtung (27) mit einem Datenspeicher und einer Dateneingabevorrichtung vorgesehen ist, welche Steuervorrichtung die relative Längenposition der Schneidvorrichtung (030) in bezug auf das Kabel (107) und/oder die mehrstufige Schneidtiefe des Messers programmsteuert. Dieses gilt ebenso für die vollständige Computersteuerung der Antriebe der übrigen Ausführungsbeispiele.

## Patentansprüche

1. Endloskabelbearbeitungsvorrichtung mit einer Kabelfördervorrichtung, die zumindest eine erste und zumindest eine zweite Transporteinrichtung (A,B;C;111;112,113) zum linear Fördern und Halten eines Kabels (107) entlang eines, durch die Kabelachse (106) definierbaren, ersten Transportweges (100) umfasst; mit wenigstens einer Messerstation (E,F,G,115) mit Werkzeugen zur Bearbeitung des Kabels (107) an diesem Transportweg (100), wobei die Messerstation (E,F,G,115) zwischen den beiden Transporteinrichtungen (A,B;C;111;112,113) angeordnet ist und letztere somit vor und nach dem Bearbeiten des Kabels (107) dieses oder je einen der - durch die Messerstation geschaffenen - einander zugewandten Kabelendbereiche (107a,b) parallel zum ersten Transportweg (100) in Kabellängsrichtung bewegbar halten, **dadurch gekennzeichnet, dass** die Messerstation (E,F,G,115)oder deren Werkzeuge und wenigstens eine der Transporteinrichtungen (A,B;C;111;112,113) annähernd rechtwinkelig oder rechtwinkelig zum ersten Transportweg (100) motorisch verschiebbar sind.

2. Kabelbearbeitungsvorrichtung nach Anspruch 1, **dadurch gekennzeichnet, dass** die Messerstation (E,F,G,115) für das Aufnehmen mehrere Werkzeuge (3;3a-h) quer zum Transportweg (100) ausgebildet ist und motorisch quer zum Transportweg (100) verschiebbar ist, so dass jedes Werkzeug (3;3a-h) in einer Arbeitsposition am Transportweg (100) positionierbar ist, wobei wenigstens zwei, gegebenenfalls stufenlos positionierbare, Aufnahmevorrich-tungen für die Werkzeuge (3;3a-h) vorgesehen sind, und wobei die Werkzeuge (3;3a-h) aus der Gruppe der kabelverarbeitenden Werkzeuge nach Bedarf wählbar sind und beispielsweise umfassen: Messer, Crimpwerkzeuge, Vertwistwerkzeuge, Stanzwerkzeuge, Klemmvorrichtungen, Markiervorrichtungen, Schleifeinrichtungen usw.

3. Vorrichtung nach Anspruch 1 oder 2, **dadurch gekennzeichnet, dass** die Transporteinrichtungen (A,B;C;111;112,113) über wenigstens je ein Rollenpaar (A,B;111) und/oder über je ein Endlosbandpaar (C;112) verfügen.

4. Vorrichtung nach einem der vorhergehenden Ansprüche, insbesondere Abisoliervorrichtung mit wenigstens einem Paar Werkzeugträger (1,2) zur Aufnahme von wenigstens zwei Werkzeugen (3), und einer Werkzeugträgervorschubeinrichtung (5) zur Positionierung des einen oder anderen Werkzeuges (3a,b,c,d) über dem ersten Transportweg (100) bzw. über einer Achse (106), entlang des bzw. der ein abzuisolierendes Kabel (107) in seiner Vorschubrichtung einschiebbar ist, wobei die Werkzeugträgervorschubeinrichtung (5) für einen gesteuerten Seitantrieb für das gesteuerte Seitwärtsverschieben wenigstens eines Werkzeugträgers (1,2) auf beliebige Positionen innerhalb eines Arbeitsbereiches seitlich des Transportweges (100) bzw. der Achse (106) ausgebildet ist.

5. Vorrichtung nach Anspruch 4, **dadurch gekennzeichnet, dass** die Werkzeuge (3) paarweise angeordnet sind, und insbesondere wenigstens zwei Messerpaare z.B. je Paar wenigstens ein Messer oben und wenigstens ein Messer unten aufweisen.

6. Vorrichtung nach einem der vorhergehenden Ansprüche, **dadurch gekennzeichnet, dass** beide Werkzeugträger (lb,2b;lc,2c) an einem gemeinsamen Trägerteil (8) gehalten und mit diesem gemeinsam verschiebbar sind.

7. Vorrichtung nach einem der vorhergehenden Ansprüche, **dadurch gekennzeichnet, dass** jedem Werkzeugträger (1,2) eine eigene Werkzeugträgerverschubeinrichtung (5a,b) zugeordnet ist, so dass obere und untere Werkzeugpositionen kombinierbar sind.

8. Vorrichtung nach einem der vorhergehenden Ansprüche, **dadurch gekennzeichnet, dass** die Werkzeughalter (1,2) - gegebenenfalls auch unabhängig voneinander - zueinander bzw. zur oder von der Achse (106) stufenlos verstellbar sind.

9. Vorrichtung nach einem der vorhergehenden Ansprüche, **dadurch gekennzeichnet, dass** eine seitlich oder nach oben bzw. unten verschwenkbare Führungsvorrichtung (9) (Pfeife) vorgesehen ist, die zur Erhöhung der Abisolierlängen seitlich oder vorzugsweise nach oben ausschwenkbar ist, um das Rückschieben eines bereits jenseits der Werkzeuge (3) liegenden Kabels (107) gegen die Einschubrichtung kollisionsfrei zu ermöglichen.

10. Vorrichtung nach einem der vorhergehenden Ansprüche, **dadurch gekennzeichnet, dass** die einander vis-à-vis der Achse (106) liegenden Rollen (A,B;111) oder Endlosbänder (C;112) - vorzugsweise stufenlos - zueinander verstellbar sind und insbesondere kabelabhängig vorschubgesteuert öffen- und schliessbar sind (so dass z.B. ein ankommendes Kabel (107) zwischen geöffneten Rollen (A,B;111) bzw. Bändern (C;112) empfangen und mittels zueinander bewegten bzw. geschlossenen Rollen (111) bzw. Bändern (112) weitertransportierbar wird) und/oder gegeneinander unter einem - vorzugsweise variier- bzw. steuerbaren -Anpressdruck haltbar sind.

11. Vorrichtung nach nach einem der vorhergehenden Vorrichtungsansprüche, **dadurch gekennzeichnet, dass** im Falle eines Endlosbandpaares (C;112) die Endlosbänder (13) um je wenigstens zwei Rollen (111) geführt sind, denen im mittleren Bereich vorzugsweise wenigstens eine Stützrolle (14) dazwischen zur Unterstützung des Bandes (13) zugeordnet ist, und/ oder dass die Bänder (13) an ihrer Innenseite zahnriemenförmig und/oder an ihrer Aussenseite rutschfest ausgebildet sind.

12. Vorrichtung nach einem der vorhergehenden Vorrichtungsansprüche, **dadurch gekennzeichnet, dass** die Endlosbandpaare (112) oder die Rollen (111) bzw. wenigstens eines der Bänder (13) der Paare (112) ersatzlos abnehmbar und/oder durch vorzugsweise beschichtete Antriebsrollen (111) oder Endlosbandpaare (112) ersetzbar sind, bzw. das Endlosbandpaarmodule (C) durch Rollenmodule (A,B) austauschbar sind und umgekehrt.

13. Vorrichtung nach einem der vorhergehenden Ansprüche, **dadurch gekennzeichnet, dass** die Werkzeugträgervorschubeinrichtung (5) wenigstens einen Motor, z.B. einen Schrittmotor (23), insbesondere einen Linearschrittmotor und einen programmierbaren Mikroprozessor zu dessen Ansteuerung und/oder einen Kabelfehlsensor umfasst, und/oder dass mehrere Werkzeugträgervorschubeinrichtungen (5) mit mehreren Werkzeugträgern (1,2) entlang der Achse (106) angeordnet sind.

14. Vorrichtung nach einem der vorhergehenden Ansprüche, **dadurch gekennzeichnet, dass** die einander gegenüberliegenden Rollen (111) oder Bänder (13), Rollenoder Bandpaare (A,B;111;C;112) durch Schrittmotore - vorzugsweise über Spindeln - zueinander verstellbar sind, wobei den Motoren eine Steuerung mit automatischem RESET und/oder einer programmierbaren Schaltung und/oder wenigstens ein Druckmessensor zur Erfassung und/oder messtechnischen Auswertung des Anpressdruckes auf das Kabel (107) zugeordnet sind.

15. Vorrichtung nach einem der vorhergehenden Ansprüche, **dadurch gekennzeichnet, dass** eine gemeinsame Grundplatte vorgesehen ist, an der entlang der Achse (106) die Transporteinrichtungen (A,B;C;111;112,113), die Messerstation (E,P,G,115) und/oder Mess- oder Markiermodule an vorgegebenen Positionen montier- bzw. demontier- oder austauschbar vorgesehen sind, wobei die Module eigene (verschiedene) Frontplatten aufweisen.

16. Vorrichtung nach einem der vorhergehenden Ansprüche, **dadurch gekennzeichnet, dass dem** Rollenpaar (A,B;111) und/oder dem Endlosbandpaar (C;112) weiters zugeordnet sind eine automatische Einfädelvorrichtung und/oder eine Messvorrichtung für die Zugbelastung am Kabel (107) und/oder eine dynamische Anpressdruckeinrichtung auf die Vorschubrollen (111) bzw. Vorschubbänder (112) insbesondere in Abhängigkeit von der Zugbelastung am Kabel (107) und/oder eine Kabelgeraderichtvorrichtung und/oder ein Längenmesssensor.

17. Vorrichtung nach einem der vorhergehenden Ansprüche, **dadurch gekennzeichnet, dass** an einer Spindel (18) des Werkzeugträgers (1,2) für die Werkzeugzustellung ein Encoder (41) angeordnet ist, der im Betriebszustand in Abhängigkeit von der Antriebsbewegung eines Antriebsmotors (23;16) - gegebenenfalls über den Vergleich mit einem vergleichbaren Encoderwert am Encoder dieses Antriebes (23;16) - für diese Verstellspindel (18)deren Drehbewegung überwacht, um ein erfolgtes Schliessen der Werkzeuge (3) zu detektieren und die Antriebsbewegung zu stoppen bzw. den Antrieb oder dessen Encoder zu eichen bzw. zu initialisieren, wobei die Verbindung zwischen Antriebsmotor (23;16) und Spindel (18) vorzugsweise elastisch - insbesondere über einen Zahnriemen (24) gekuppelt ist. (Fig.7)

18. Vorrichtung nach einem der vorhergehenden Ansprüche, **dadurch gekennzeichnet, dass** ein Steuerglied mit Rechner vorgesehen ist, das im Betriebszustand nach Eingabe des Kabeldurchmessers und gegebenenfalls einer Kabeltypenbezeichnung und der gewünschten Abisolierlänge automatisch eine Voröffnung der Rollenpaare oder Endlosbandpaare (A,B;111;C,112) und/oder einen Anpressdruck für das Abziehen langer Isolationsstücke berechnet und einstellt bzw. die Antriebe entsprechend steuert.

19. Vorrichtung mit einem ersten und einem zweiten Endlosbandpaar (112) für einen Kabelvorschub, nach einem der vorhergehenden Ansprüche, **dadurch gekennzeichnet, dass** dem zweiten Endlosbandpaar (112b) eine Greifvorrichtung zugeordnet ist, wobei das zweite Endlosbandpaar (112b) so ausgebildet ist, dass es nach Bedarf das Kabel (107) freigibt, so dass es durch die Greifvorrichtung entfernt werden kann.

20. Vorrichtung nach einem der vorhergehenden Ansprüche, insbesondere nach einem der Ansprüche 1 bis 6, **dadurch gekennzeichnet, dass** die Verschiebbarkeit der wenigstens einen, vorzugsweise beider Transporteinrichtungen (A,B;112;C;113) das Parallelverschieben des Kabels (107) bzw. mindestens eines Kabelendes (107a,b) aus dem ersten Transportweg (100) in wenigstens einen zweiten Transportweg (102,103) erlaubt, und dass dem zweiten Transportweg (102,103) eine Weiterbearbeitungsstation (16, 17) zugeordnet oder zuordenbar (z.B. ein Fremdgerät) ist.

21. Vorrichtung nach Anspruch 20, **dadurch gekennzeichnet, dass** die Weiterbearbeitungsstation mindestens eine Transport- oder Bearbeitungsstation (16, 17), wie etwa einer Abisolier-, einer Säge-, einer Einschneid-, einer Vertwist-, einer Verformungs-, eine Crimp- oder eine Lötstation, eine Kabelendbearbeitungsstation oder einen Manipulatorarm o.dgl. umfasst.

22. Vorrichtung nach Anspruch 20 oder 21, **dadurch gekennzeichnet, dass** mindestens eine, vorzugsweise aber beiderseits der Messerstation (E,F,G,115) je eine, Transporteinrichtung (A,B;111;C;112,113) in einer Geradführung (110) quer zum Transportweg (100) geführt und insbesondere von einer Antriebsvorrichtung (111-14), vorzugsweise einem Schrittmotor, bewegbar ist.

23. Vorrichtung nach einem der Ansprüche 20-22, **dadurch gekennzeichnet, dass** die Antriebsvorrichtung (111-14) jeder bewegbaren Transporteinrichtung (111;112,113) und mindestens ein, vorzugsweise aber beiderseits der Messerstation (E,F,G,115) je ein, unabhängiger Förderantrieb mit einer gemeinsamen Steuerung, die vorzugsweise auch die Messer- (E,F,G,115) und die mindestens eine Weiterbearbeitungsstation (16, 17) steuert, verbunden ist, so dass alle Längs- und Querbewegungen koordiniert und zeitoptimiert, insbesondere auch auf die Bearbeitungsschritte abgestimmt, durchführbar sind.

24. Vorrichtung nach einem der vorhergehenden Ansprüche, **dadurch gekennzeichnet, dass** beide Transporteinrichtungen (112) durch ein gemeinsames motorisch angesteuertes Stellglied (101) miteinander verbunden sind, so dass vorzugsweise die Querverstellung der einen Transporteinrichtung (112a) zwangsweise eine gegengleiche Seitverstellung der anderen Transporteinrichtung (112b) bewirkt.(Fig.23,25,26)

25. Vorrichtung nach einem der vorhergehenden Ansprüche, **dadurch gekennzeichnet, dass** wenigstens eine Transporteinrichtung (112a) durch ein gemeinsames, motorisch angesteuertes Stellglied (104) mit der Messerstation (115) oder mit wenigstens einem Werkzeugträger derselben verbunden ist, so dass vorzugsweise die Querverstellung der einen Transporteinrichtung (112b) zwangsweise eine gegengleiche Querverstellung der Messerstation (115) oder des Werkzeugträgers bewirkt.(Fig.24)

26. Vorrichtung nach einem der vorhergehenden Ansprüche, **dadurch gekennzeichnet, dass** die Messerstation eine rotierbare Schneidvorrichtung bzw. ein rotierbares Messer umfasst, **oder dass** zusätzlich zur Messerstation eine zweite Messerstation mit einer rotierbaren Schneidvorrichtung bzw. mit einem rotierbaren Messer (030) vorgesehen ist; dessen Rotationsachse am bzw. an einem der Transportwege (100,102,103) liegt.

27. Vorrichtung nach Anspruch 26, **dadurch gekennzeichnet, dass** das Kabel (107) während des Einschneidens mit dem Messer (030) an wenigstens zwei Seiten, vorzugsweise beiden Seiten des Messers (030) von einer Einspann- und /oder Zentriervorrichtung zentriert (eingespannt) gehalten wird, wobei wenigstens eine Halte- bzw. Einspannstelle in unmittelbarer Nähe des Messers (030) angeordnet wird, wobei der Messervorschub mit dem Vorschub für die Einspann- und/oder Zentriervorrichtung gekoppelt ist oder wobei der Einspannvorschub vom Messervorschub getrennt ist, und wobei wenigstens eine - vorzugsweise beide - Transporteinrichtungen bzw. eine Einspann- und/oder Zentriervorrichtung drehfrei gehalten wird oder die dem Messer nächstliegende Einspannund/oder Zentriervorrichtung (111;112) mit diesem mitrotiert.

28. Vorrichtung nach Anspruch 26, **dadurch gekennzeichnet, dass** die Einspann- und/oder Zentriervorrichtung (A,B;111,C;112;013) wenigstens zwei - vorzugsweise vier Einspann- und/oder Zentrierbacken (111;112;013) umfasst, die in einer Ebene liegen und je eine Haltefläche aufweisen, die wenigstens annähernd normal auf eine Radialebene durch das Kabel (107) stehen und so ausgebildet sind, dass ein Schliessen der Backen (A,B;111;C;112;013) auf annähernd Null-Kabeldurchmesser möglich ist.

29. Abisoliervorrichtung nach einem der Ansprüche 26 oder 28, **dadurch gekennzeichnet, dass** das Messer wenigstens zwei Messerbacken (030) umfasst, die in einer Ebene liegen und je eine Schneidkante aufweisen, die wenigstens annähernd parallel zu je einer Tangentialebene auf das Kabel (107) ausgebildet sind und auf Null schliessbar und so vorschiebbar sind, dass in Abhängigkeit vom Kabeldurchmesser unterschiedliche Erstberührungspunkte an der Kante mit dem Kabelmantel entstehen.

30. Vorrichtung nach einem der vorhergehenden Ansprüche, **dadurch gekennzeichnet, dass** die Messerstation, insbesondere das Messer und wenigstens eine zentrierende Einspannvorrichtung (A,B;111,C;112,013) als selbsttätiges Bearbeitungsmodul (Rotativbox) (057) ausgebildet ist, das entfernbar an einer Endloskabelbearbeitungsmaschine (058) angebracht ist, wobei das Modul (057) vorzugsweise über ein Scharnier (059) mit dem Rahmen der Endloskabelbearbeitungsmaschine (058) verbunden ist, so dass es aus einer - in bezug auf das Kabel (107) - axialen Arbeitslage in eine dazu schräge Montagelage schwenkbar ist.

31. Vorrichtung nach einem der vorhergehenden Vorrichtungsansprüche, **dadurch gekennzeichnet, dass** die Zentrierbacken (013) im Schnitt L-förmig aufgebaut sind, so dass Ihre Halteflächen einen relativ grossen axialen Bereich eines Kabelmantels abdecken und deren Enden unmittelbar neben das Messer (030) ragen.

32. Vorrichtung nach einem der vorhergehenden Vorrichtungsansprüche, **dadurch gekennzeichnet, dass** ein Längenmesser in Form eines annähernd kraft- oder berührungslos direkt oder indirekt messenden, beispielsweise mechanischen oder lichtoptischen, Sensors zum Abtasten der Kabeloberfläche vorgesehen ist, der gegebenenfalls parallel zu Schrittmessungen in den Antrieben der Transporteinrichtungen misst, so dass jede Längenmessung qualitätskontrolliert ist.

## Claims

1. Continuous cable processing device having a cable transport device which comprises at least one first and at least one second transport means (A, B; C; 111; 112, 113) for linear transport and holding of a cable (107) along a first transport path (100) definable by the cable axis (106), having at least one knife station (E, F, G, 115) with tools for processing the cable (107) along this transport path (100), the knife station (E, F, G, 115) being arranged between the two transport means (A, B; C; 111; 112, 113) and, before or after the processing of the cable (107) said transport means thus holding said cable or one each of the cable end regions (107a,b) provided by the knife station and facing one another so that said cable or said regions can move parallel to the first transport path (100) in the cable longitudinal direction, **characterized in that** the knife station (E, F, G, 115) or the tools thereof and at least one of the transport means (A, B; C; 111; 112, 113) are displaceable approximately at right angles or at right angles to the first transport path (100) under motor power.

2. Cable processing device according to Claim 1, **characterized in that** the knife station (E, F, G, 115) is formed for receiving a plurality of tools (3; 3a-h) transversely to the transport path (100) and is displaceable under motor power transversely to the transport path (100) so that each tool (3; 3a-h) can be positioned in a working position along the transport path (100), at least two, optionally continuously positionable holding devices for the tools (3; 3a-h) being provided, and the tools (3; 3a-h) being capable of being chosen as required from the group consisting of the cable-processing tools and comprising, for example: knives, crimping tools, twisting tools, punching tools, clamping devices, marking devices, grinding devices, etc.

3. Device according to Claim 1 or 2, **characterized in that** the transport means (A, B; C; 111; 112, 113) each have at least one pair of rollers (A, B; 111) and/or each have a pair of continuous belts (C; 112).

4. Device according to any of the preceding Claims, in particular insulation stripping device having at least one pair of tool carriers (1, 2) for holding at least two tools (3), and a tool carrier feed means (5) for positioning one or other tool (3a,b,c,d) above the first transport path (100) or above an axis (106), along which transport path or along which axis a cable (107) to be stripped can be pushed in its feed direction, the tool carrier feed means (5) being formed for a controlled lateral drive for the controlled sidewards displacement of at least one tool carrier (1, 2) to any desired positions within a working range to the side of the transport path (100) or of the axis (106).

5. Device according to Claim 4, **characterized in that** the tools (4) are arranged in pairs, and in particular at least two pairs of knives have, for example, at least one knife at the top and at least one knife at the bottom for the pair.

6. Device according to any of the preceding Claims, **characterized in that** both tool carriers (1b, 2b; 1c, 2c) are held on a common carrier part (8) and are displaceable together with it.

7. Device according to any of the preceding Claims, **characterized in that** a separate tool carrier feed means (5a,b) is coordinated with each tool carrier (1, 2) so that upper and lower tool positions can be combined.

8. Device according to any of the preceding Claims, **characterized in that** the tool holders (1, 2) - optionally also independently of one another - can be adjusted continuously relative to one another or towards or away from the axis (106).

9. Device according to any of the preceding Claims, **characterized in that** a guide device (9) (pipe) pivotable laterally or upwards or downwards is provided, which guide device can be swivelled out laterally or preferably upwards to increase the stripping lengths, in order to enable a cable (107) already lying on the other side of the tools (3) to be pushed back in a direction opposite to the insertion direction without collision.

10. Device according to any of the preceding Claims, **characterized in that** the rollers (A, B; 111) opposite one another across the axis (106) or continuous belts (C; 112) are - preferably continuously - adjustable relative to one another and in particular can be opened and closed depending on the cable and under feed control (so that, for example, an arriving cable (107) is received between opened rollers (A, B; 111) or belts (C; 112) and can be transported onwards by means of rollers (111) or belts (112) closed or moved relative to one another) and/or can be held against one another under a contact pressure which is preferably variable or controllable.

11. Device according to any of the preceding device Claims, **characterized in that**, in the case of a continuous pair of belts (C; 112), the continuous belts (13) are each passed around at least two rollers (111) with which, in the middle region, preferably at least one support roller (14) is coordinated in between for supporting the belt (13), and/or that the belts (13) are in the form of a toothed belt on their inside and/or are nonslip on their outside.

12. Device according to any of the preceding device Claims, **characterized in that** the pairs of continuous belts (112) or the rollers (111) or at least one of the belts (13) of the pairs (112) can be removed without replacement and/or can be replaced by preferably coated drive rollers (111) or pairs of continuous belts (112), or the continuous belt pair modules (C) can be replaced by roller modules (A, B), and vice versa.

13. Device according to any of the preceding Claims, **characterized in that** the tool carrier feed means (5) comprises at least one motor, for example a stepping motor (23), in particular a linear stepping motor, and a programmable microprocessor for the control thereof and/or a cable absence sensor, and/or that a plurality of tool carrier feed means (5) are coordinated with a plurality of tool carriers (1, 2) along the axis (106).

14. Device according to any of the preceding Claims, **characterized in that** the rollers (111) or belts (13) opposite one another and belonging to roller or belt pairs (A, B; 111; C; 112) are adjustable relative to one another by stepping motors, preferably via spindles, a control with automatic RESET and/or a programmable circuit and/or at least one pressure sensor for the measurement and/or instrument evaluation of the contact pressure on the cable (107) are coordinated with the motors.

15. Device according to any of the preceding Claims, **characterized in that** a common baseplate is provided, on which, along the axis (106), the transport means (A, B; C; 111; 112, 113), the knife station (E, F, G, 115) and/or measuring or marking modules are provided in predetermined positions in a mountable or removable or exchangeable manner, the modules having their own (different) front panels.

16. Device according to any of the preceding Claims, **characterized in that** an automatic threading device and/or a measuring device for the tensile load on the cable (107) and/or a dynamic contact pressure means on the feed rollers (111) or feed belts (112), in particular as a function of the tensile load on the cable (107) and/or a cable straightening device and/or a length sensor, are furthermore coordinated with the pair of rollers (A, B; 111) and/or with the pair of continuous belts (C; 112).

17. Device according to any of the preceding Claims, **characterized in that** an encoder (41) is arranged on an adjusting spindle (18) of the tool carrier (1, 2) for tool feed, which encoder, in the operating state, monitors the rotational movement of this adjusting spindle (18) as a function of the drive movement of a drive motor (23; 16) - optionally by comparison with a comparable encoder value on the encoder of this drive (23; 16) - in order to detect completed closing of the tools (3) and to stop the drive movement or to calibrate or to initialize the drive or the encoder thereof, the connection between drive motor (23; 16) and spindle (14) preferably being elastic - in particular coupled by means of a toothed belt (24). (Fig. 7)

18. Device according to any of the preceding Claims, **characterized in that** a control element with a computer is provided, which control element, in the operating state, after input of the cable diameter and optionally of a cable type designation and of the desired stripping length, automatically calculates and sets a preliminary opening of the pairs of rollers or pairs of continuous belts (A; B; 111; C, 112) and/or a contact pressure for stripping of long pieces of insulation or controls the drives appropriately.

19. Device having a first and second pair of continuous belts (112) for cable feed, according to any of the preceding Claims, **characterized in that** a gripping device is coordinated with the second pair of continuous belts (112b), the second pair of continuous belts (112b) being formed in such a way that it releases the cable (107) as required so that said cable can be removed by the gripping device.

20. Device according to any of the preceding Claims, in particular according to any of Claims 1 to 6, **characterized in that** the displaceability of the at least one transport means, preferably both transport means (A; B; 112; C; 113), permits the parallel displacement of the cable (107) or of a least one cable end (107a,b) from the first transport path (100) into at least one second transport path (102, 103), and that a further processing station (16, 17) is or can be coordinated (e.g. an external device) with the second transport path (102, 103).

21. Device according to Claim 20, **characterized in that** the further processing station comprises at least one transport or processing station (16, 17), such as, for example, a stripping, a sawing, an incision, a twisting, a shaping, a crimping or a soldering station, a cable end processing station or a manipulator arm or the like.

22. Device according to Claim 20 or 21, **characterized in that** at least one transport means (A, B; 111; C; 112, 113), but preferably one transport means each on either side of the knife station (E, F, G, 115), is guided in a straight guide (110) transversely to the transport path (100) and can be moved in particular by a drive device (111-14), preferably a stepping motor.

23. Device according to any of Claims 20-22, **characterized in that** the drive device (111-14) of each movable transport means (111; 112, 113) and at least one independent transport drive, but preferably one independent transport drive each on either side of the knife station (E, F, G, 115), is connected to a common control which preferably also controls the knife station (E, F, G, 115) and the at least one further processing station (16, 17), so that all longitudinal and transverse movements can be carried out in a coordinated manner and optimized with respect to time, in particular tailored to the processing steps.

24. Device according to any of the preceding Claims, **characterized in that** the two transport means (112) are connected to one another by a common motor-controlled actuator (101) so that preferably the transverse adjustment of one transport means (112a) inevitably results in a diametrically opposed lateral adjustment of the other transport means (112b). (Fig. 23, 25, 26)

25. Device according to any of the preceding Claims, **characterized in that** at least one transport means (112a) is connected by a common, motor-controlled actuator (104) to the knife station (115) or to at least one tool carrier, so that preferably the transverse adjustment of one transport means (112b) inevitably results in a diametrically opposed transverse adjustment of the knife station (115) or of the tool carrier. (Fig. 24)

26. Device according to any of the preceding Claims, **characterized in that** the knife station comprises a rotatable cutting device or a rotatable knife, or that, in addition to the knife station, a second knife station having a rotatable cutting device or having a rotatable knife (030) is provided, the axis of rotation of which lies on the transport path or on one of the transport paths (100, 102, 103).

27. Device according to Claim 26, **characterized in that**, during incision with the knife (030), the cable (107) is held centred (clamped) on at least two sides, preferably both sides of the knife (030), by a clamping and/or centring device, at least one holding or clamping point being arranged in the immediate vicinity of the knife (030), the knife feed being coupled to the feed for the clamping and/or centring device or the clamping feed being separate from the knife feed, and at least one transport means - preferably both transport means - or a clamping and/or centring device being held nonrotatably or the clamping and/or centring device (111; 112) closest to the knife being rotated together with it.

28. Device according to Claim 26, **characterized in that** the clamping and/or centring device (A, B; 111, C; 112; 013) comprises at least two - preferably four - clamping and/or centring jaws (111; 112; 013) which lie in a plane and each have a holding surface, which are at least approximately normal to a radial plane through the cable (107), and are thus formed in such a way that closing of the jaws (A, B; 111; C; 112; 013) to virtually zero cable diameter is possible.

29. Insulation stripping device according to either of Claims 26 and 28, **characterized in that** the knife comprises at least two knife jaws (030) which lie in a plane and each have a cutting edge, which are formed at least approximately parallel to one plane each which is tangential to the cable (107) and can be closed to zero and can thus be advanced so that different first contact points of the edge with the cable sheath result depending on the cable diameter.

30. Device according to any of the preceding Claims, **characterized in that** the knife station, in particular the knife and at least one centring clamping device (A, B; 111, C; 112 , 013) are in the form of an independent processing module (rotational box) (057) which is mounted in a removable manner on a continuous cable processing machine (058), the module (057) preferably being connected by means of a hinge (059) to the frame of the continuous cable processing machine (058), so that it can be swivelled from an axial working position - relative to the cable (107) - into a mounting position skew thereto.

31. Device according to any of the preceding device Claims, **characterized in that** the centring jaws (013) are L-shaped in section so that their holding surfaces cover a relatively large axial range of a cable sheath and the ends thereof project directly next to the knife (030) .

32. Device according to any of the preceding device Claims, **characterized in that** a length-measuring means in the form of a sensor which operates virtually without force or contact, directly or indirectly, for example a mechanical or optical sensor, is provided for scanning the cable surface, which sensor optionally measures parallel to step measurements in the drives of the transport means so that each length measurement is quality-controlled.

## Revendications

1. Dispositif de traitement de câble sans fin ayant un dispositif de transport de câble, qui comprend au moins un premier et au moins un second dispositif de transport (A,B;C; 111;112,113)pour transporter linéairement et supporter un câble (107) le long d'un premier chemin de transport (100) à être défini par l'axe du câble (106), et ayant au moins une station de lames (E,F,G,115), qui comprend des outils pour traiter le câble (107) à ce chemin de transport (100), la station de lames (E,F,G,115) étant située entre les deux dispositifs de transport (A,B;C; 111;112,113) et ainsi ces derniers maintenant le câble (107), ou une chacune des zones de bout de câble (107a,b) créée par la station de lames et opposées l'une à l'autre, mobile en direction longitudinale du câble parallèlement au premier chemin de transport (100), **caractérisé en ce que** la station de lames (E,F,G,115) ou l'outils de celle-ci et au moins un des dispositifs de transport (A,B;C; 111;112,113) sont déplaçables soit approximativement en direction perpendiculaire, soit perpendiculairement au premier chemin de transport (100) par un moteur.

2. Dispositif de traitement de câble selon la revendication 1, **caractérisé en ce que** la station de lames (E,F,G,115) est formé pour recevoir plusieurs outils (3;3a-h) transversalement au chemin de transport (100) et est déplaçable par moteur transversalement au chemin de transport (100) de manière que chaque outils (3;3a-h) peut être positionné dans une position de travaille au chemin de transport (100), au moins deux dispositifs de réception des outils (3;3a-h) étant prévus, le cas échéant positionnables sans gradation, et que les outils (3;3a-h) peuvent être choisis de la groupe des outils à traitement de câble suivant les besoins et comprennent, par exemple: des lames, des outils de crimp, des outils de twist (torsion), des outils d'estampage, des dispositifs de serrage, des dispositifs marqueurs, des dispositifs d'affûtage etc.

3. Dispositif selon la revendication 1 ou 2, **caractérisé en ce que** les dispositifs de transport (A,B;C; 111;112,113) possèdent au moins une paire respective de poulies (A,B;111) et/ou une paire respective de bandes en boucle continue (C;112).

4. Dispositif selon une quelconque des revendications précédentes, particulièrement comprenant une paire de porte-outils (1, 2) pour recevoir au moins deux outils (3), et un dispositif d'avance de porte-outils (5) pour positionner l'un ou l'autre outil (3a, b, c, d) au-dessus du premier chemin de transport (100) ou au-dessus d'un axe (106), le long duquel un câble à dénuder (107) est introducible en sa direction d'avance, le dispositif d'avance de porte-outils (5) étant formé pour un déplacement latéral commandé d'au moins un porte-outils (1, 2) aux positions quelconques au dedans d'un champ d'activité à côté du chemin de transport (100) ou de l'axe (106).

5. Dispositif selon la revendication 4, **caractérisé en ce que** les outils (3) sont disposés par paires, et que particulièrement au moins deux paires de lames ont par exemple au moins une lame au-dessus et au moins une lame en bas.

6. Dispositif selon une quelconque des revendications précédentes, **caractérisé en ce que** deux porte-outils (1b, 2b; 1c, 2c) sont supportés par une pièce de support (8) commune et sont déplaçables conjointement avec celui-ci.

7. Dispositif selon une quelconque des revendications précédentes, **caractérisé en ce qu'**à chaque porte-outils (1,2) un dispositif propre d'avance de porte-outils (5a,b) est associé de manière qu'on peut combiner les positions d'outils supérieures et inférieures.

8. Dispositif selon une quelconque des revendications précédentes, **caractérisé en ce que** les porte-outils (1,2) - le cas échéant indépendamment l'un de l'autre - sans ajustables sans gradation l'un à l'autre ou vers ou de l'axe (106).

9. Dispositif selon une quelconque des revendications précédentes, **caractérisé en ce qu'**un dispositif de guidage (9) (felle) est prévu, qui est pivotable soit latéralement, soit en haut ou en bas, et qui est pivotable latéralement ou, de préférence, en haut pour augmenter les longueurs de dénudage pour rendre possible sans collision le déplacement en retraite d'un câble (107), étant déjà au-delà des outils (3), contre la direction d'avance.

10. Dispositif selon une quelconque des revendications précédentes, **caractérisé en ce que** les poulies (A,B;111) ou bandes en boucle continue (C;112), situés les uns à les autres vis-à-vis de l'axe (106), sont ajustables les uns vers les autres, préférablement sans gradation, et en particulier peuvent être ouverts et fermés en fonction du câble sous la commande de l'avancement (de manière que, par exemple, un câble (107) arrivant est reçu entre les poulies (A,B;111) ou bandes (C;112) ouverts et est transporté au moyens des poulies (111) ou bandes (112) mues les uns vers les autres ou fermés) et/ou sont maintenus sous une pression, préférablement variable ou commandable, les uns contre les autres.

11. Dispositif selon une quelconque des revendications de dispositif précédentes, **caractérisé en ce qu'**en cas d'une paire de bandes en boucle continue (12), chaque bande en boucle continue (13) est guidée autour de deux poulies (11), au moins un rouleau d'appui (14) étant associé préférablement entre eux pour appuyer la bande (13) dans une zone moyenne, et/ou que les bandes (13) au côté intérieur ont la forme d'une courroie dentée et/ou ont un côté extérieur antidérapant.

12. Dispositif selon une quelconque des revendications de dispositif précédentes, **caractérisé en ce que** les paires de bandes en boucle continue (112) ou les poulies (111) ou au moins unes des bandes (13) des paires (112) sont enlevable sans remplacement et/ou peuvent être remplacée par des poulies d'entraînement (111) ou paires de bandes en boucle continue (112), préférablement enduites et/ou que des modules de paires de bandes en boucle continue (C) peuvent être remplacés par des modules à poulies (A,B) .

13. Dispositif selon une quelconque des revendications précédentes, **caractérisé en ce que** le dispositif d'avance de porte-outils (5) comprend au moins un moteur, p.e. un moteur pas à pas (23), particulièrement un moteur linéaire pas à pas, et un microprocesseur programmable pour commander celui-ci et/ou un capteur de manque de câble et/ou que plusieurs dispositifs d'avance de porte-outils (5) avec plusieurs porte-outils (1, 2) sont disposés le long de l'axe (106).

14. Dispositif selon une quelconque des revendications précédentes, **caractérisé en ce que** les poulies (111) ou bandes (13) opposés les uns à les autres, ou les paires de poulies ou bandes (A,B;111;C;112) sont déplaçables les uns vers les autres par des moteurs pas à pas, de préférence au moyens des broches, un réglage avec un RESET automatique et/ou un circuit programmable et/ou au moins un capteur de pression pour détecter et/ou évaluer d'une technique de mesure de la pression appliquée au câble (107) étant associés aux moteurs.

15. Dispositif selon une quelconque des revendications précédentes, **caractérisé en ce qu'**une plaque de base commune est prévue, à laquelle les dispositifs de transport (A,B;C;111;112,113), la station de lames (E,F, G,115) et/ou des modules de mesure ou de marquage sont prévus aux positions données le long de l'axe (106) pour être démontés ou remplacés, les modules présentants des plaques frontales propres (différentes).

16. Dispositif selon une quelconque des revendications précédentes, **caractérisé en ce qu'**on a associé aux paire de poulies (A,B;111) et/ou de bandes sans fin (C;112) de plus: un dispositif d'enfilement automatique et/ou un dispositif de mesure pour la charge de traction au câble (107) et/ou un dispositif presseur dynamique aux poulies d'avance (111) ou aux bandes d'avance (112), particulièrement en fonction de la charge de traction au câble (107) et/ou un dispositif de redressement de câble et/ou un appareil compteur de longueur.

17. Dispositif selon une quelconque des revendications précédentes, **caractérisé en ce qu'**un encodeur (41) est disposé à une broche de déplacement (18) du porte-outils (1,2) pour l'avancement d'un outil, ledit encodeur, en état de marche, contrôlant le mouvement rotatif de cette broche de déplacement (18) en fonction du mouvement d'entraînement d'un moteur d'entraînement (23; 16), le cas échéant au moyens d'une comparaison avec un valeur d'encodeur comparable au encodeur de cet entraînement (23;16), pour détecter la fermeture des outils (3) et pour arrêter le mouvement d'entraînement ou calibrer ou initialiser l'entraînement ou l'encodeur de celui-ci, la connexion entre le moteur d'entraînement (23;16) et la broche (14) étant couplée préférablement d'une manière élastique, particulièrement au moyens d'une courroie dentée (24). (Fig. 7)

18. Dispositif selon une quelconque des revendications précédentes, **caractérisé en ce qu'**un organe de contrôle avec un ordinateur est prévu, qui, dans son état opératif, après introduction du diamètre du câble et, le cas échéant d'une identification du type du câble et de la longueur de dénudage désirée, calcule et ajuste une pression pour enlever des pièces d'isolation longue ou commande l'entraînement d'une manière correspondante.

19. Dispositif comprenant une première et une deuxième paire de bandes sans fin (112) pour avancer un câble, selon une quelconque des revendications de dispositif précédentes, **caractérisé en ce qu'**un dispositif de griffe est associé au deuxième paire de bandes sans fin (112b), ladite deuxième paire de bandes sans fin (112b) étant formée de manière à libérer le câble (107) suivant les besoins de façon que le dispositif de griffe le peut enlever.

20. Dispositif selon une quelconque des revendications précédentes, particulièrement selon une quelconque des revendications 1 à 6, **caractérisé en ce que** la déplaçabilité d'au moins un dispositif de transport (A,B; 112;C;113), préférablement de tous les deux, permet à déplacer parallèlement le câble (107) ou au moins un bout de câble (107a,b) du premier chemin de transport (100) à au moins un deuxième chemin de transport (102,103), et qu'une station de traitement ultérieur (16, 17) est associée ou peut être associée (par exemple un outillage étranger) au deuxième chemin de transport (102,103).

21. Dispositif selon la revendication 20, **caractérisé en ce que** la station de traitement ultérieur comprend au moins une station de transport ou de traitement (16, 17), comme, par exemple, une station de dénudage, de sciage, d'incision, de distorsion (twist), de déformation, de crimpage ou de brasage, une station de traitement du bout de câble ou un bras d'un manipulateur ou pareil.

22. Dispositif selon la revendication 20 ou 21, **caractérisé en ce qu'**au moins un dispositif de transport (A,B;111;C; 112,113), mais préférablement un chacun aux deux côtés de la station de lames (E,F,G,115), est guidé dans un guidage droit (110) transversalement au chemin de transport (100), et est particulièrement mobile par un dispositif d'entraînement (111-14), préférablement par un moteur pas à pas.

23. Dispositif selon une quelconque des revendications 20 à 22, **caractérisé en ce que** le dispositif d'entraînement (111-14) de chaque dispositif de transport mobile (111;112,113), et qu'au moins un entraînement de convoyage indépendant, mais préférablement un chacun aux deux côtés de la station de lames (E,F,G,115), est relié à une unité de commande, qui de préférence commande aussi la station de lames (E,F,G,115) et au moins une station de traitement ultérieur (16, 17), de manière que tous les mouvement longitudinaux et transversaux peuvent être effectués de manière coordinée et optimalisée en temps, particulièrement accordée aux pas de traitement.

24. Dispositif selon une quelconque des revendications précédentes, **caractérisé en ce que** les deux dispositifs de transport (112) sont mutuellement reliés par un organe final (101) commandé par moteur, préférablement de manière qu'un déplacement transversal d'un dispositif de transport (112a) cause par contrainte un déplacement latéral diamétralement opposé de l'autre, dispositif de transport (112b).(Fig. 23, 25, 26)

25. Dispositif selon une quelconque des revendications précédentes, **caractérisé en ce qu'**au moins un dispositif de transport (112a) est reliés à la station de lames (115) ou à au moins un porte-outils de celle-ci par un organe final (101) commandé par moteur, préférablement de manière qu'un déplacement transversal d'un dispositif de transport (112a) cause par contrainte un déplacement latéral diamétralement opposé de la station de lames (115) ou du porte-outils.(Fig. 24)

26. Dispositif selon une quelconque des revendications précédentes, **caractérisé en ce que** la station de lames comprend un dispositif de coupure rotatif ou une lame rotative, ou qu'additionnellement à la station de lames une deuxième station de lames est prévue avec un dispositif de coupure rotatif ou une lame rotative, l'axe de rotation étant située au chemin de transport ou à un desquels.

27. Dispositif selon la revendication 26, **caractérisé en ce que** le câble (107) est arrêté pendent l'incision avec la lame (030) au moins des deux côtés, préférablement des deux côtés de la lame (030) et centré (serré) par un dispositif de serrage et/ou de centrage, au moins un endroit d'arrêt ou de serrage étant situé en voisinage immédiat de la lame (030), le dispositif d'avance de lame étant couplé au dispositif d'avance du dispositif de serrage et/ou de centrage ou le dispositif de serrage étant séparé du dispositif d'avance de lame, et qu'au moins un dispositif de transport, préférablement les deux, ou un dispositif de serrage et/ou de centrage est tenu sans rotation, ou que le dispositif de serrage et/ou de centrage (111;112) en voisinage de la lame tourne en commun avec la dernière.

28. Dispositif selon la revendication 26, **caractérisé en ce que** le dispositif de serrage et/ou de centrage (A,B;111; C;112,013) comprend au moins deux mâchoires de serrage et/ou de centrage (111;112;013), préférablement quatre, qui sont situées dans un plan et comprennent chacune une surface d'arrêt, qui sont disposées au moins approximativement perpendiculairement à un plan radial par le câble (107) et sont agencées de manière à rendre possible la fermeture des mâchoires (A,B;111;C;112;013) jusqu'à un diamètre de câble d'approximativement zéro.

29. Dispositif selon une des revendications 26 ou 28, **caractérisé en ce que** la lame comprend au moins deux mâchoires de lame (030) situées dans un plan et présentant chacune une arête de coupure, qui sont formées au moins d'une façon approximative parallèlement chacune à un plan tangentiel au câble (107), peuvent être fermées jusqu'à zéro et avancées de manière à résulter, en dépendance du diamètre du câble, en des points de contact primaire différents de l'arrête à la gaine de câble.

30. Dispositif selon une quelconque des revendications précédentes, **caractérisé en ce que** la station de lames, particulièrement la lame et au moins un dispositif de serrage centrant (A,B;111;C;112,013), est formée comme module de traitement automatique (box rotative) (057), qui est ajouté d'une manière démontable à une machine de traitement de câble sans fin (058), le module (057) étant, de préférence, relié au châssis de la machine de traitement de câble sans fin (058) de façon qu'il est pivotable d'une position de travail axiale, par rapport au câble (107), à une position de montage inclinée à celle-ci.

31. Dispositif selon une quelconque des revendications de dispositif précédentes, **caractérisé en ce que** les mâchoires de centrage (013) ont, en profile, la forme d'un L, de manière que ses surface d'arrête couvre une relativement grande zone axiale de la gaine du câble et que leurs extrémités s'élèvent directement à côté de la lame (030).

32. Dispositif selon une quelconque des revendications de dispositif précédentes, **caractérisé en ce qu'**un compteur de longueur en forme d'un capteur approximativement sans force ou contact, directe ou indirecte, par exemple mécanique ou photo-optique, est prévu pour explorer la surface de câble, qui, le cas échéant, mesure parallèlement aux mesurages de pas dans les entraînements des dispositifs de transport, de manière que la qualité de chaque mesure de longueur soit contrôlée.
